# EUROPÄISCHE PATENTSCHRIFT

(11) **EP 2 415 695 B1**
(45) Veröffentlichungstag und Bekanntmachung des Hinweises auf die Patenterteilung: **02.09.2015**
(21) Anmeldenummer: 11173816.7
(22) Anmeldetag: 13.07.2011
(51) Int. Cl.: B65G 47/84, B65B 21/06, B65B 35/40

(54) **Verfahren und Vorrichtung zur Bildung von Gruppen zu verpackender Artikel und profilierte Schubleiste zur Verwendung hierbei**
Method and device for producing groups of items for packaging and profiled thrust bar for use of same
Dispositif et procédé pour regrouper des articles à faire emballer et coulisses de tiroir profilées pour appliquer ce procédé

(30) Priorität: 05.08.2010 DE 102010033549
(43) Veröffentlichungstag der Anmeldung: 08.02.2012
(73) Patentinhaber: Krones AG, 93073 Neutraubling (DE)
(72) Erfinder: Koch, Peter, 93073 Neutraubling (DE); Werner, Jürgen, 93073 Neutraubling (DE); Spindler, Herbert, 93073 Neutraubling (DE); Kästner, Florian, 93073 Neutraubling (DE); Drahuniak, Volker, 93073 Neutraubling (DE)
(74) Vertreter: Benninger, Johannes

(56) Entgegenhaltungen:
- WO-A1-2006/024460
- DE-A1- 1 956 474
- DE-A1- 2 247 945
- DE-U1-202008 011 454
- NL-A- 7 400 367
- US-A- 3 724 639
- US-A- 5 271 709
- US-A1- 2010 012 462

## Beschreibung

Die vorliegende Erfindung betrifft ein Verfahren zur Bildung von zu verpackenden Gruppen mehrerer gleichartiger, insbesondere zylindrischer Artikel wie Getränkebehälter, Flaschen, Dosen o. dgl. in nestartiger Anordnung mit den Merkmalen des unabhängigen Anspruchs 1. Die Erfindung betrifft weiterhin eine Vorrichtung zur Durchführung des Verfahrens zur Bildung von zu verpackenden Gruppen mehrerer gleichartiger Artikel mit den Merkmalen des Anspruchs 11. Zudem betrifft die Erfindung eine symmetrisch oder asymmetrisch profilierte Schubleiste zur Überführung einer in horizontaler Richtung beförderten Gruppe von Artikeln in eine verdichtete Anordnung mit den Merkmalen des Anspruchs 14.

Bei der Handhabung und Verpackung von Behältern werden diese oftmals zu Gebinden mit einer Mehrzahl von regelmäßig aneinander stehenden Behälterverbundanordnungen zusammengefasst, die anschließend mit einer Schrumpffolie umhüllt und auf diese Weise für den späteren Transport und die Lagerung fest zusammengehalten werden. Um Behälter mit abschnittsweise zylindrischen oder annähernd zylindrischen Formen wie bspw. Getränkedosen oder Getränkeflaschen möglichst platzsparend und mit möglichst geringer Relativbeweglichkeit zueinander zusammenzufassen, ist es sinnvoll, einen sog. Waben oder Kugelverbund zu bilden, der auch als genestete Anordnung bezeichnet werden kann. Hierbei stehen die Behälter jeweils derart in Reihen versetzt zueinander, dass die zwischen den Behältern gebildeten Lücken möglichst gering ausfallen. Eine solche Waben- oder Kugelanordnung stellt einen Verbund einer gegebenen Anzahl von Behältern mit der geringstmöglichen Grundfläche dar.

Um einen solche Behälterverbundanordnung zu erzielen, werden die in mehreren, bspw. mittels Gassenblechen voneinander separierten Reihen beförderten Behälter mittels geeigneter Leiteinrichtungen einander angenähert, so dass eine in Förderrichtung versetzte Anordnung der jeweils angrenzenden Reihen um einen halben Behälterdurchmesser erreicht wird, wie dies bspw. aus der US 25 35 880 A bekannt ist. Die Behälter werden bei dieser bekannten Fördereinrichtung jeweils lückenlos in sieben parallelen Reihen befördert, bis sie in einen Umlenkbereich gelangen, bei denen die außen liegenden Gassenbleche jeweils nach innen abgeknickt sind und somit alle Reihen bis auf die mittlere so umlenken, dass die Behälter aneinander gerückt werden. Die sich daran anschließende gemeinsame Fördergasse für die sieben versetzt zueinander angeordneten Behälter weist eine Gesamtbreite auf, welche den aneinander gerückten und versetzt zueinander beförderten Behältern entspricht. Da keine weiteren Hilfsmittel vorgesehen sind, birgt diese Art der Behälterumlenkung die Gefahr von Kollisionen und ungewollter Lückenbildung.

Um eine gezielte Verschiebung einzelner Behälterreihen zu erreichen, sind verschiedene Varianten bekannt geworden. So sieht bspw. die US 37 24 639 A ein symmetrisch profiliertes Element vor, das gleichzeitig an Querreihen von Flaschen angreift und diese senkrecht zur Transportrichtung um einen gewünschten Betrag verschiebt, um auf diese Weise die gewünschte versetzte Anordnung der Flaschen zu erreichen. Die US 64 90 845 B1 sieht dagegen eine Verschiebung jeder zweiten Reihe in Transportrichtung vor, um die gewünschte versetzte Anordnung zu erreichen. Die Besonderheit ist dabei, dass die Behälter in einer bestimmten Art und Weise in einer Behältergruppe eingeteilt werden. Die Einteilung sieht vor, dass die äußeren beiden Reihen Behälter der Behältergruppe jeweils einen Behälter mehr aufweisen, wohingegen die inneren drei Reihen somit um einen Behälter reduziert sind. Hierzu sind umlaufende Stäbe mit daran angeordneten Walzen passenden Durchmessers vorgesehen, die in Transportrichtung von hinten jeweils an zuvor gruppierte Behälterreihen angreifen, um jede zweite Reihe um ein bestimmtes Maß in Förderrichtung zu verschieben, bevor die gruppierten Behälter in einen verengten Bereich gelangen, in dem sie quer zur Transportrichtung zusammengeschoben werden, wodurch die gewünschte Kugelpackung erzielt wird. Nachteilig an dieser Ausführung ist die fehlende Sicherheit, dass der vorderste Behälter jeder zweiten Reihe exakt an die gewünschte Position nämlich zur dritten Reihe hin bewegt. Des weiteren würde bei fest fixierten, an den Stäben angeordneten Walzen die Funktionalität der zu erstellenden Gebindevarianten (6x4 oder 8x4) eingeschränkt sein.

Um diese Einschränkungen zu reduzieren und die Verarbeitbarkeit unterschiedlich großer Gebindegruppen zu ermöglichen, ist aus dem Stand der Technik weiterhin die US 77 26 464 B2 bekannt, bei der die Verengung der Transportgasse jedoch über eine längere Transportstrecke verläuft. Um die Behälterreihen alternierend in Transportrichtung um ein Maß, dass ungefähr dem halben Behälterdurchmesser entspricht, zu verschieben, sind ebenfalls an umlaufenden Stäben angeordnete Walzen vorgesehen, die jedoch zusätzlich in Längsrichtung der Stäbe verschiebbar sind, um während ihres Kontakts mit den Behältern entlang des Transportwegs bei sich seitlich aufeinander zu bewegenden Behältern diesen seitlich zu Transportrichtung gerichteten Behälterverschiebungen zu folgen. Um dies zu erreichen, werden die Walzen durch Führungsbleche aufeinander zu bewegt, so dass sie den jeweiligen Positionen der Behälter auf dem sich verengenden Transportweg exakt folgen können. Nachteilig an dieser Ausführungsform ist jedoch der komplexe Aufbau von Führungsblechen, die Notwendigkeit der Sicherstellung der Ausgangsanordnung der Walzen auf den Stäben sowie die erforderlich Demontage und Wiedermontage bei einem Wechsel des gewünschten Gebindeformats. Weiterhin ist das System nicht schmutzresistent, was durchaus dazu führen kann, dass die Walzen in Ihrer Verschieberichtung blockieren und somit zu einer Störung bzw. zu einem Maschinenstillstand beitragen.

Durch US 2010/0012462 A1 ist eine Vorrichtung zur Bildung einer verdichteten Anordnung zu verpackender, in Gruppen aufgeteilter Flaschen bekannt. Die Vorrichtung umfasst ein erstes Transportband und ein zweites Transportband sowie Mittel, um die Artikel von ersten Transportband zum zweiten Transportband zu schieben und in die verdichtete Anordnung zu überführen. Zwischen dem ersten Transportband und dem zweiten Transportband kann eine unbeweglich angeordnete Platte vorgesehen sein, über welche die Artikel geschoben werden. Die Artikel werden in durch Gassenbleche voneinander getrennten Reihen mittels des ersten Transportbandes zugeführt. Um die Artikel in Gruppen zu separieren sind Klemmen an den Gassenblechen und Tore in den Gassen vorgesehen. Um die Artikel vom ersten Transportband zum zweiten Transportband zu schieben, ist eine umlaufende, mitlaufende, mit Zipfeln versehene, bzw. gekerbte, gezackte Stange vorgesehen. Die Zipfel bzw. Kerben, Zacken können durch Hülsen gebildet sein, die entlang der Stange frei verschiebbar, jedoch gegenüber dieser unverdrehbar angeordnet sind.

Durch WO 2006/024460 A1 ist bekannt, aus einem Strom von vermittels einer Transportvorrichtung in horizontaler Förderrichtung transportierten Artikeln Gruppen von Artikeln abzutrennen, indem abwechselnd ein in Förderrichtung gesehen erstes Paar von unter der Transportvorrichtung vertikal beweglich angeordneten Stiften, mit einem Abstand quer zur Förderrichtung zwischen den Stiften, der geringer ist, als ein Artikeldurchmesser, und ein in einem Abstand in Förderrichtung, der einer Anzahl von in dem Strom aufeinander folgender Artikel entspricht, die zu einer Gruppe von Artikeln abgetrennt werden sollen, dem ersten Paar von Stiften nachgeordnetes Paar von ebenfalls unter der Transportvorrichtung vertikal beweglich angeordneten Stiften, mit einem Abstand quer zur Förderrichtung zwischen den Stiften, der ebenfalls geringer ist, als ein Artikeldurchmesser, zwischen die Artikel ein- und wieder austauchen und die im Strom ankommenden Artikel dadurch gegenüber der Transportvorrichtung zurückhalten bzw. Gruppen von Artikeln freigeben, die dann mit der Transportvorrichtung in Förderrichtung weitertransportiert werden.

Durch DE 20 2008 011 454 U1 ist bekannt, aus einem Strom von Artikeln Gruppen von Artikeln abzutrennen, indem Einteilelemente quer in den Strom von Artikeln eingreifen.

Durch NL 7400367 ist bekannt, auf einem über einem in einer ersten Förderrichtung arbeitenden Abtransportband in einer Abziehrichtung entgegen der ersten Förderrichtung beweglich angeordneten Bereitstellungsblech eine Gruppe von verdichtet in mehreren Reihen quer zur ersten Förderrichtung angeordneten Artikeln vermittels eines längs- und quer zur ersten Förderrichtung beweglich angeordneten Schiebers reihenweise zu bilden und durch Wegziehen des Bereitstellungsblechs in Abziehrichtung dem Abtransportband zu übergeben. Die Artikel können in der Gruppe teilweise gegeneinander verschoben sein. Die Artikel werden bereits entsprechend ihrer benötigten Anzahl je Reihe voneinander abgetrennt vermittels eines Zufuhrtransportbands in einer der ersten Förderrichtung entgegen gerichteten, zweiten Förderrichtung zugeführt. Der Schieber weist eine Profilierung auf, die es erlaubt, sowohl eine in Querrichtung gesehen hintere Reihe entsprechend einer zu erreichenden, verdichteten Anordnung zu bilden, als auch eine in Querrichtung gesehen vordere Reihe. Dies wird dadurch erreicht, dass die Profilierung unterschiedliche Abschnitte aufweist, die abhängig von der Längsverschiebung in und entgegen der ersten Förderrichtung mit den auf dem Zufuhrtransportband zugeführten, abgetrennten Artikeln in Eingriff kommt.

Durch US 5,271,709 ist bekannt, aus einem bereits verdichtet ankommenden Artikelstrom Gruppen von Artikeln abzutrennen, indem Einteilerstifte von oben zwischen die auf einer konstant bewegten Fördereinrichtung entreffenden Artikel des Artikelstroms zeitweilig eingreifen. Die Einteilstifte geben den Artikelstrom zeitweilig frei, um eine der abzutrennenden Gruppe entsprechende Anzahl von Artikeln durchzulassen. Die so abgetrennte Gruppe wird von einer quer zur Fördereinrichtung angeordneten und oberhalb der Fördereinrichtung mit dieser entlang einer eigenen, umlaufenden Bewegungsbahn beweglich angeordneten Leiste zunächst aufgehalten. Die Leiste weist an ihrer zu der Gruppe von Artikeln weisenden Seite, als auch an ihrer gegenüberliegenden Seite eine Profilierung auf, die mit einer Außenkontur einer in verdichtete Anordnung verschobenen Gruppe von Artikeln korrespondiert. Liegt die ganze Gruppe an der Leiste an, fährt die Leiste entlang einer oberen, rückführenden Partie ihrer Bewegungsbahn zunächst schneller als die Fördereinrichtung um, so dass sie die daraufhin mit der Fördereinrichtung weiterbewegte Gruppe überrundet und mit ihrer gegenüberliegenden Seite am hinteren Ende der Gruppe zum anliegen kommt. Dann fährt die Leiste mit wesentlich höherer Geschwindigkeit entlang einer unteren, vorlaufenden Partie ihrer Bewegungsbahn. Dabei schiebt sie die Gruppe von der Fördereinrichtung als oberste Lage auf einen bis dato an einem Stapelplatz aufgestapelten Stapel, in dem jeweils eine Gruppe eine Stapellage bildet.

Ein Ziel der vorliegenden Erfindung besteht darin, ein wesentlich vereinfachtes, kostengünstiges und zuverlässig arbeitendes Verfahren und eine entsprechende Vorrichtung zur Verdichtung von Gruppen aufrecht stehender Artikel zur Verfügung zu stellen, bei dem diese während ihres Transports in eine engere, verdichtete Anordnung gebracht werden. Ein weiteres Ziel der Erfindung besteht darin, ein Schubelement zur Verfügung zu stellen, das die weitgehend fehlerfreie und zuverlässig arbeitende Vorrichtung bei der Herstellung einer solchen verdichteten Anordnung der Artikelgruppen unterstützen kann.

Diese Ziele der Erfindung werden mit den Gegenständen der unabhängigen Ansprüche erreicht. Merkmale vorteilhafter Weiterbildungen der Erfindung ergeben sich aus den jeweiligen abhängigen Ansprüchen.

Zur Erreichung der Ziele schlägt die vorliegende Erfindung ein Verfahren zur Bildung einer verdichteten bzw. genesteten Anordnung zu verpackender, in Gruppen aufgeteilter, vorzugsweise mehrreihig hintereinander angeordneter Artikel, insbesondere gleichartiger zylindrischer Artikel wie Getränkebehälter, Flaschen, Dosen oder dgl. innerhalb einer Verpackungsmaschine vor, wobei die Gruppe von Artikeln zumindest in einem Teilabschnitt ihres Transportweges, insbesondere in einem in Förderrichtung entlang der Längsseiten verjüngenden Bereich, durch die Verpackungsmaschine mittels wenigstens einer in Bewegungsrichtung symmetrisch oder asymmetrisch profilierten Leiste, welche an einer Stirnseite der Gruppen von Artikeln, insbesondere in Förderrichtung an der Hinterseite der Gruppe von Artikeln anliegt, geführt wird und dabei zumindest einzelne der Artikel der Gruppe gegeneinander in die verdichtete oder genestete Anordnung verschoben werden. Der Teilabschnitt des Transportweges mit den sich verjüngenden Längsseiten kann wahlweise eine Auflagefläche zur gleitenden Schubbewegung der Artikel aufweisen, die mittels der an der Hinterseite der Gruppe angreifenden, als symmetrisch oder asymmetrisch profilierte Schubleiste wirkenden Leiste in Transportrichtung geschoben werden. D.h., die gesamte Gruppe führt auf dem genannten Teilabschnitt eine gleitende Bewegung der Artikel aus, so dass die Förderbewegung im Wesentlichen nur durch die Schubbewegung der symmetrisch oder asymmetrisch profilierten Schubleiste erfolgt, so dass deren Profilierung für die gewünschte Verschiebung der Artikel in die verdichtete genestete Anordnung sorgen kann.

Die Leiste weist an ihrer zu der Gruppe von Artikeln weisenden Seite eine Profilierung auf, die mit einer Außenkontur einer in verdichtete Anordnung verschobenen Gruppe von Artikeln korrespondiert.

Die Leiste weist ein Wellen- oder Nockenprofil mit alternierend angeordneten Mulden und Nocken, die jeweils einen Abstand aufweisen, der geringer ist, als ein Artikeldurchmesser sowie Flanken auf. In der endgültigen Anordnung nimmt jede Mulde einen Artikel auf, während an der Stirnseite jeder Nocke ebenfalls ein Artikel anliegt. Während der Bildung der verdichteten Anordnung gleiten Artikel entlang Flanken.

Die zu verdichtenden Artikel können insbesondere mehrreihig hintereinander angeordnet sein, bspw. in einer regelmäßigen NxM-Anordnung (N Artikel in jeder von M nebeneinander befindlichen Reihen). Die Artikel können insbesondere gleichartig und von identischer Kontur und Gestalt sein. Grundsätzlich eignet sich das Verfahren jedoch auch zur Verschiebung unterschiedlich geformter und/oder dimensionierter Artikel. Wenn im Zusammenhang der vorliegenden Beschreibung von einer genesteten oder nestenden Anordnung die Rede ist, so ist damit grundsätzlich eine verdichtete Anordnung der Artikel gemeint, die unter Reduzierung der zwischen ihnen befindlichen Lücken versetzt zueinander angeordnet werden, bspw. in einer sog. Wabenanordnung. Hierzu sind Artikel mit nicht quadratischen oder nicht rechteckigen Grundflächen erforderlich, bspw. zylindrische Artikel oder solche mit sechs- oder achteckigen Grundflächen, die in eine verdichtete Anordnung gebracht werden können. Die von der verdichteten Artikelanordnung beanspruchte Gesamtfläche ist hierbei gegenüber der ursprünglichen Standfläche der regelmäßig nebeneinander angeordneten Reihen von Artikeln reduziert. Diese verdichtete oder nestende Anordnung der Artikel hat nicht nur den Vorteil des reduzierten Volumens und Flächenbedarfs, sondern trägt auch zur mechanischen Stabilisierung der Gebindeanordnungen bei, wenn diese bspw. mit einer Umreifung oder mit einer Schrumpffolie verpackt und zu Gebinden zusammengefasst werden. Die gegeneinander verschobenen und in Waben- oder Nestform gebrachten Artikel stabilisieren sich hierbei gegenseitig, da sich ihre Mantelflächen gegeneinander abstützen.

Bei dem Verfahren kann vorgesehen sein, dass die Artikel in mehreren parallelen, voneinander abgetrennten Einzelreihen in horizontaler Richtung befördert und auf einen sich in Förderrichtung entlang der Längsseiten verjüngenden Bereich ohne Reihenabtrennungen überführt werden. In diesem Bereich wird jede Gruppe von mehreren Artikeln mittels der wenigstens einen in Förderrichtung von hinten an die Gruppe heranbewegten profilierten Schubleiste in einer in mehrere Richtungen wirkenden Versatz- und/oder Verschiebebewegung der Artikel gegeneinander in die verdichtete bzw. nestartige Anordnung gebracht. Die beschriebene Variante des erfindungsgemäßen Verfahrens sieht eine kombinierte Überführung der zuvor in regelmäßigen Reihen beförderten Artikel in eine engere und besonders Platz sparende Packungsanordnung vor, bei der die Artikel zunächst in einen Bereich ohne sog. Gassenbleche überführt werden, der sich allmählich verjüngt, bis die Breite des Förderbereichs aufgrund der seitlich eingezogenen Wände nur noch die gewünschte Packungsdichte, auch als nestende Anordnung bezeichnet, zulässt. Die Überführung der Artikel in die gewünschte Anordnung zueinander wird zudem ordnend unterstützt durch die symmetrisch oder asymmetrisch profilierten Schubleisten, die in Förderrichtung gesehen von hinten an die jeweilige Gruppe angreifen und die zuvor in regelmäßigen oder unregelmäßig und parallelen Reihen beförderten Artikel so verschieben, dass die Reihen jeweils um einen definierten Längenbetrag bzw. in die gewünschte Position in Förderrichtung verschoben werden. Hierdurch wird die gewünschte definierte bzw. nestende Anordnung der jeweiligen Gruppe von Artikeln erreicht.

Wenn im vorliegenden Zusammenhang die Rede von wenigstens einer Schubleiste ist, so umfasst dies sowohl eine einzelne, mit einer geeigneten Profilierung versehene Schubleiste, die an die Reihen von Artikeln angreift und diese in gewünschter Weise versetzt und verschiebt. Definitionsgemäß kann die Schubleiste jedoch auch mehrteilig ausgebildet sein, wobei die zwei oder mehr Teile jeweils mit einer Profilierung versehen sein und gegeneinander in Transportrichtung oder quer zu dieser verschiebbar sein können. So kann die Profilierung einer mehrteilig ausgebildeten Schubleiste bspw. eine Summe oder Schnittmenge aus der angenäherten Anfangs- und Endposition der Behälterreihen bilden. Diese gewünschte Summenprofilierung kann wahlweise durch balkenartig übereinander angeordnete Einzelprofile gebildet sein, die gegensinnig senkrecht zur Transportrichtung verschiebbar sein können, um die gewünschte verdichtete Anordnung zu erzielen. Eine sinnvolle Variante kann darüber hinaus Schubleistenpaare vorsehen, die in Transportrichtung gegeneinander verschiebbar sein können und je nach aktueller Position alternierend gegeneinander bewegt werden, um die gewünschte Artikelanordnung zu erreichen.

Die obige Erwähnung regelmäßiger Reihen soll jedoch keineswegs als Einschränkung verstanden werden, da mit dem Verfahren auch unregelmäßig angeordnete Reihen abgetrennt und in die gewünschte genestete Anordnung gebracht werden können. Eine solche Gruppierung von Artikeln kann bspw. darin bestehen, dass eine Reihe sechs aufeinander folgende Behälter in Förderrichtung und eine benachbarte Reihe nur fünf Behälter, die darauf folgende Reihe wieder sechst Behälter usw. aufweisen und somit eine genestete Formation bilden.

Wenn im vorliegenden Zusammenhang von symmetrisch oder asymmetrisch profilierten Schubleisten die Rede ist, so sind damit Schubleisten gemeint, deren Vorderkante in Bezug auf eine vertikal stehende Mittelebene oder in Bezug auf eine in Vorschubrichtung ausgerichtete Mittelachse zu beiden Seiten gleich (symmetrisch) oder unterschiedlich (d.h. asymmetrisch) profiliert ist, wobei diese Profilierung mit einer Außenkontur der in genestete Anordnung verschobenen Behälter- oder Artikelgruppe korrespondiert. Für die meisten Anwendungen wird man ein asymmetrisches Profil wählen, da damit eine gezielte Artikelverschiebung ermöglicht wird. Allerdings ist zu betonen, dass das erfindungsgemäße Verfahren auch mit einer regelmäßig geformten, d.h. symmetrisch profilierten Schubleiste durchgeführt werden kann. Es kann somit davon gesprochen werden, dass vorzugsweise eine asymmetrische Profilierung eingesetzt wird.

Bei einer alternativen Ausführungsvariante des erfindungsgemäßen Verfahrens weist dagegen der Teilabschnitt des Transportweges mit den sich verjüngenden Längsseiten eine Transportebene mit sich bewegender Auflagefläche zum stehenden Transport der Artikel auf. Hierbei ist nicht zwingend eine von hinten an die Gruppe angreifende Schubleiste erforderlich, sondern eine der an der Vorderseite der Gruppe angreifende, als symmetrisch oder asymmetrisch profilierte Anschlagleiste zur Verzögerung der Gruppe wirkende profilierte Leiste vorgesehen, welche die einzelnen Artikel der Gruppe entgegen der Transportrichtung verzögert und durch ihre Profilierung gleichzeitig in die gewünschte genestete Anordnung bringt. So sorgt diese Variante des Verfahrens dafür, dass die vorderen Artikel jeder Gruppe beim Angriff der symmetrisch oder asymmetrisch profilierten Anschlagleiste während deren Anlage entlang des sich verjüngenden Bereichs der Konturierung der Anschlagleiste anpassen und in die nestartige Anordnung verschoben werden.

Wenn im vorliegenden Zusammenhang von Gruppen von Artikeln die Rede ist, so können dies bspw. Getränkebehälter oder Flaschen, aber auch Dosen oder andere zumindest abschnittsweise zylindrische oder annähernd zylindrische Behälter sein. Wenn weiterhin von parallelen Reihen von Artikeln die Rede ist, so können dies zwei, drei oder mehr gleichartige Reihen sein, die in paralleler Richtung und Anordnung befördert werden, insbesondere mittels Förderbänder, Mattenförderern o. dgl. Aus diesen parallelen Reihen soll mit Hilfe des erfindungsgemäßen Verfahrens ein sehr dichter Verbund geschaffen werden, der anschließend ohne weitere Haltemittel nur mit einer Folie oder einer horizontal um die Artikelgruppe gespannten Umreifung zusammengehalten wird. Typischerweise können die Artikel bspw. mit einer Schrumpffolie umhüllt werden, die durch Wärmeeinwirkung anschließend fest um die Artikelgruppe gespannt wird, wodurch ein leicht zu transportierendes, zu stapelndes und handhabbares Gebinde bzw. Schrumpfgebinde entsteht.

Das erfindungsgemäße Verfahren kann vorsehen, dass die in Förderrichtung hinteren Behälter jeder Gruppe mittels der in Förderrichtung der Artikel bewegten symmetrisch oder asymmetrisch profilierten Schubleiste mit Unterstützung der die Artikel senkrecht zur Förderrichtung gegeneinander verschiebenden, sich verjüngenden seitlichen Führungsleisten jeweils in benachbarten Längsreihen alternierend in Transportrichtung versetzt und in eine Kugelpackungsanordnung gebracht werden, was der zu erzielenden genesteten bzw. nestenden Anordnung der Artikel entspricht.

Die bei dem erfindungsgemäßen Verfahren wahlweise eingesetzten Schubleisten und/oder Anschlagleisten dienen zur gezielten Verschiebung einzelner Reihen einer aus mehreren nebeneinander beförderten Reihen gebildeten Gruppe in bzw. entgegen der Förderrichtung. Hierzu weisen die Schubleisten, die jeweils von hinten an die Gruppen angelegt werden, jeweils eine geeignete Profilierung auf, welche in ihrer Kontur der zu erzielenden Außenkontur der Gruppe von Artikeln entspricht. Auf diese Weise passen sich die hintersten Artikel jeder Gruppe beim Angriff der symmetrisch oder asymmetrisch profilierten Schubleiste während deren Bewegung entlang des sich verjüngenden Bereichs der Konturierung der Schubleiste an und werden in die gewünschte nestartige Anordnung verschoben, bei der die Lücken zwischen den Artikeln minimiert sind. Diese nestartige Anordnung ähnelt einer wabenförmigen Anordnung der Artikel.

Die Leiste weist ein Wellen- oder Nockenprofil mit alternierend angeordneten Mulden und Nocken, die jeweils einen Abstand aufweisen, der geringer ist, als ein Artikeldurchmesser sowie Flanken auf. In der endgültigen Anordnung nimmt jede Mulde einen Artikel auf, während an der Stirnseite jeder Nocke ebenfalls ein Artikel anliegt. Darüber hinaus sind Flanken vorgesehen, entlang denen während der Bildung der verdichteten Anordnung Artikel gleiten.

Bei der alternativen Verwendung von an den Vorderseiten der Gruppen angreifenden Anschlagleisten sind auch diese Anschlagleisten mit einer geeigneten Profilierung versehen, welche in ihrer Kontur der zu erzielenden Außenkontur der Gruppe von Artikeln entspricht. Auf diese Weise passen sich die vordersten Artikel jeder Gruppe beim Angriff der symmetrisch oder asymmetrisch profilierten Anschlagleiste während deren Bewegung entlang des sich verjüngenden Bereichs der Konturierung der Anschlagleiste an und werden in die gewünschte nestartige Anordnung verschoben, bei der die Lücken zwischen den Artikeln minimiert sind. Bei dieser Variante werden die Artikel von einer Fördereinrichtung in horizontale Richtung bewegt, von den sich seitlich verjüngenden Führungsleisten gegeneinander gedrückt, verschoben und versetzt und gleichzeitig mittels der Anschlagleiste in die exakt passende Lage und Anordnung gebracht, so dass eine lückenlose Packungsdichte in nestender Anordnung gebildet wird. Nach der Verschiebung der Artikel liegt der in Transportrichtung vordere Artikel einer Reihe in einer Mulde der asymmetrisch profilierten Anschlagleiste, so dass der in Transportrichtung vordere Artikel einer benachbarten Reihe an einem Vorsprung der Anschlagleiste anliegt. Wie bereits zuvor erwähnt, wechseln sich Mulden und Vorsprünge jeweils ab, so dass die gewünschte nestende Anordnung der Artikel durch die Profilierung und Außenkontur der Anschlagleiste vorgegeben ist.

Da die gewünschte nestartige Anordnung eine dichtere Packungsanordnung der Artikel bedeutet, ist dabei eine Verschiebung der äußeren Behälterreihen der jeweiligen Gruppe erforderlich, was in erster Linie durch den sich verjüngenden Förderkanal mit sich verengenden seitlichen Führungsleisten gewährleistet wird. Aufgrund der sich verjüngenden Führungsbahn für die Artikel erfahren diese während ihrer Verschiebung nicht nur eine von den Schubleisten ausgelöste bzw. von den Anschlagleisten verzögerte Längsverschiebung in Transportrichtung, sondern auch eine seitliche Bewegung einzelner Artikel mit einer Bewegungskomponente senkrecht zur Förderrichtung. Diese seitliche Bewegungskomponente betrifft die äußeren Reihen, die in Richtung zur mittleren Reihe bewegt werden, nicht jedoch diese mittlere Reihe, die weitgehend unverändert seine Bahn beibehalten kann. Zum Zentrum hin erfolgt eine abnehmende Verschiebung der Artikel, die zu beiden Seiten insbesondere gleichmäßig erfolgen kann.

Die Schubleiste ist zweckmäßigerweise so gestaltet, dass nach der Verschiebung der Artikel der in Transportrichtung hintere Artikel einer Reihe in einer Mulde der asymmetrisch profilierten Schubleiste und der in Transportrichtung hintere Artikel einer benachbarten Reihe an einem Vorsprung der Schubleiste anliegt. Diese Profilierung der zu der Artikelgruppe gerichteten Seite der Schubleiste kann bspw. durch ein Wellenprofil oder durch ein gezacktes Profil, wahlweise mit abgerundeten Spitzen gebildet sein. Entsprechendes gilt auch für die Anschlagleisten, die der Transportbewegung der zu sortierenden und verschiebenden Gruppen von Artikeln in Längsrichtung entgegen wirken. Wahlweise kann weiterhin vorgesehen sein, dass zumindest eine der zu verschiebenden Reihen von Artikeln mittels eines beweglich an der Schubleiste gelagerten Elements eine seitliche Bewegungskomponente erfährt. Dieses beweglich an der Schubleiste bzw. der Anschlagleiste gelagerte Element kann bspw. ein federunterstützter Bügel oder Riegel o. dgl. sein, der eine seitliche Verschiebung eines der Artikel durch die gefederte Lagerung um eine vertikale Achse unterstützen kann. Wahlweise können mehrere solcher beweglicher Elemente an der Schub- bzw. Anschlagleiste vorgesehen sein, ggf. auch in symmetrischer Anordnung.

Weiterhin schlägt die Erfindung eine Vorrichtung zur Durchführung des Verfahrens zur Bildung einer verdichteten oder genesteten Anordnung zu verpackender, in Gruppen aufgeteilter, vorzugsweise mehrreihig hintereinander angeordneter gleichartiger oder verschiedenartiger und/oder gleich oder unterschiedlich dimensionierter Artikel, insbesondere zylindrischer Artikel wie Getränkebehälter, Flaschen, Dosen o. dgl. innerhalb einer Verpackungsmaschine gemäß einer der zuvor beschriebenen Ausführungsvarianten vor. Diese Vorrichtung umfasst einen Transportweg für die Gruppe von Artikeln, der sich zumindest in einem Teilabschnitt in Förderrichtung entlang seiner Längsseiten verjüngt. Weiterhin ist eine asymmetrisch profilierte Leiste vorgesehen, die an einer Stirnseite der Gruppe von Artikeln zur Überführung der Artikel in eine verdichtete bzw. nestartige Anordnung anlegbar ist. Diese Leiste weist eine zur Gruppe der Artikel gerichtete Strukturierung bzw. Profilierung auf, die mit einer Außenkontur einer nestartigen Anordnung der Artikel korrespondiert. Die erwähnte Leiste kann ein- oder mehrteilig ausgebildet sein, wobei eine aus zwei oder mehr Teilen bestehende Leiste eine zusammengesetzte Profilierung aufweist, die ein Summenprofil bildet, je nach Relativbewegung der Leistenteile gegeneinander. Wahlweise können die Leisten als Schubleisten ausgebildet sein, so dass die erfindungsgemäße Vorrichtung eine Einrichtung zur Förderung der Artikel in mehreren parallelen, voneinander abgetrennten Einzelreihen in horizontaler Richtung sowie einen sich daran in Förderrichtung anschließenden, sich entlang der Längsseiten verjüngenden Bereich ohne Reihenabtrennungen aufweisen kann. Weiterhin sind von hinten an die Gruppen von Artikeln heran und in Förderrichtung bewegbare symmetrisch oder asymmetrisch profilierte Schubleisten zur Überführung der Artikel in eine nestartige Anordnung vorhanden. Diese Schubleisten weisen jeweils eine zur Gruppe der Artikel gerichtete Strukturierung bzw. Profilierung auf, die mit einer Außenkontur einer verdichteten bzw. nestartigen Anordnung der Artikel korrespondiert. Alternativ hierzu können die Leisten auch als Anschlagleisten ausgebildet sein, wobei hier der Bereich ohne Reihenabtrennung und mit den sich seitlich verjüngenden Führungsleisten über einen eigenen Antrieb für die Gruppen in Förderrichtung verfügen muss, so dass die vorne an die Stirnseite angreifende symmetrisch oder asymmetrisch profilierte Anschlagleiste für die Verschiebung der Artikel in die nestende Anordnung sorgen kann.

Die Leiste weist ein Wellen- oder Nockenprofil mit alternierend angeordneten Mulden und Nocken, die jeweils einen Abstand aufweisen, der geringer ist, als ein Artikeldurchmesser sowie Flanken auf. In der endgültigen Anordnung nimmt jede Mulde einen Artikel auf, während an der Stirnseite jeder Nocke ebenfalls ein Artikel anliegt. Darüber hinaus sind Flanken vorgesehen, entlang denen während der Bildung der verdichteten Anordnung Artikel gleiten.

Um jede der Vielzahl von beabstandet voneinander beförderten Gruppen jeweils in der gewünschten Weise beeinflussen und verschieben zu können, muss jeder der Gruppen eine separate Schubleiste oder Anschlagleiste zugeordnet sein, die in synchronisierter Bewegung zu der die Artikel bewegenden Fördereinrichtung umlaufen bzw. zu den Artikelgruppen herangeführt werden. Um dies zu gewährleisten, können bspw. mehrere symmetrisch oder asymmetrisch profilierte Schub- oder Anschlagleisten an seitlich entlang des Transportwegs der Artikel endlos umlaufenden Zugmitteln angeordnet sein. So können bspw. eine Mehrzahl von Leisten jeweils an seitlich des Transportwegs angeordneten und endlos umlaufenden Rollenketten verankert sein, so dass durch den Verlauf der Ketten und der Steuerung ihrer Umlaufgeschwindigkeit die gewünschte Positionierung der Leisten und deren Synchronisierung gewährleistet werden kann.

Zusätzlich zur Variante mit den von hinten angreifenden symmetrisch oder asymmetrisch profilierten Schubleisten kann weiterhin an einer Vorderseite jeder Gruppe von Artikeln eine mit der Gruppe entlang der Förderrichtung mitbewegte Halteleiste zur Anlage an die vorderen Artikel angeordnet sein. Auch diese Halteleisten können in vergleichbarer Weise wie die Schubleisten mittels endlos umlaufender Zugmittel bzw. Rollenketten in synchronisierter Bewegung mit den beförderten Artikeln mitlaufen bzw. mitbewegt werden. Die Halteleisten dienen in erster Linie zur Aufrechterhaltung des Artikelverbundes, da aufgrund der Verschiebung durch die Schubleisten und die sich verjüngenden seitlichen Führungsleisten des Transportwegs die Gefahr von Ablösungen einzelner Artikel nach vorne aus der Gruppe besteht, was bei der späteren Verpackung und Palettierung zu Störungen und Behinderungen führen kann, insbesondere wenn der abgelöste Artikel entweder fehlt, sich an einer falschen Position am Gebinde befindet oder gar umfällt und dadurch zu Störungen im Förder- und/oder Verpackungsablauf führen kann.

In gleicher Weise kann bei einer Variante mit von vorne angreifenden und den Artikelstrom verlangsamenden symmetrisch oder asymmetrisch profilierten Anschlagleisten an einer Hinterseite jeder Gruppe von Artikeln eine mit der Gruppe entlang der Förderrichtung mitbewegte Halteleiste zur Anlage an die hinteren Artikel angeordnet sein. Auch diese Halteleisten können in vergleichbarer Weise wie die vorderen Anschlagleisten mittels endlos umlaufender Zugmittel bzw. Rollenketten in synchronisierter Bewegung mit den beförderten Artikeln mitlaufen bzw. mitbewegt werden. Diese hinten angeordneten Halteleisten dienen ebenfalls zur Aufrechterhaltung des Artikelverbundes, da aufgrund der Verzögerung und Querverschiebung durch die Anschlagleisten und die sich verjüngenden seitlichen Führungsleisten des Transportwegs die Gefahr von Ablösungen einzelner Artikel nach hinten aus der Gruppe besteht, was bei der späteren Verpackung und Palettierung zu Störungen und Behinderungen führen kann, bspw. wenn der abgelöste Artikel fehlt, sich an einer falschen Position im Gebinde befindet oder gekippt ist.

Neben den beschriebenen Varianten sind auch Kombinationen denkbar, bei der sowohl eine hintere Schubleiste als auch eine vordere Anschlagleiste eingesetzt werden, die jeweils über eine geeignete Profilierung verfügen. Der sich verjüngende Bereich kann hierbei wahlweise über eine Fördereinrichtung zum Transport der Artikel oder über eine Gleitfläche zu deren schiebender Bewegung mittels der Schubleiste verfügen.

Die Erfindung umfasst schließlich eine Anordnung mehrerer symmetrisch oder asymmetrisch profilierter Schub- und/oder Anschlagleisten, die zur Überführung der in horizontaler Richtung beförderten Gruppen von Artikeln in nestartige Anordnungen dienen. Die erfindungsgemäßen symmetrisch oder asymmetrisch profilierten Schub- bzw. Anschlagleisten weisen jeweils eine zur Gruppe der Artikel gerichtete Strukturierung bzw. Profilierung auf, die mit einer Außenkontur einer nestartigen Anordnung der Artikel korrespondiert. So weisen die Schub- bzw. Anschlagleisten vorzugsweise jeweils ein Wellen-oder Nockenprofil auf, bei dem die alternierend angeordneten Mulden und Nocken jeweils eine Profilhöhe aufweisen, die ungefähr einem halben Artikeldurchmesser oder weniger entsprechen kann. Zudem weisen die alternierend angeordneten Mulden und Nocken jeweils definierte Abstände auf, die jeweils maximal einem Artikeldurchmesser entsprechen können, vorzugsweise jedoch geringer sind. Die Profilhöhen und Abstände der Mulden und Nocken hängen von der gewünschten Artikelformation ab, die damit hergestellt werden soll.

Wahlweise können die erfindungsgemäßen Schub- oder Anschlagleisten jeweils mehrteilig ausgebildet sein und wenigstens zwei relativ zueinander bewegliche Leistenteile aufweisen, deren Summenprofil je nach Relativposition der wenigstens zwei Leistenteile veränderlich ist. Die resultierende Profilierung der mehrteiligen und relativ zueinander beweglichen Leisten kann somit als eine Schnittmenge aus der Anfangskontur des Umrisses der zu verschiebenden Artikelgruppe und der gewünschten Endkontur des Gebindebildes nach der Verschiebung in die verdichtete Anordnung betrachtet werden. Das Profil kann auch als das Ergebnis einer empirischen Betrachtung gesehen werden. Es wird hier ein Vergleich des zu Beginn bestehenden Gebindebildes mit dem nach der Verschiebung zu erzielenden Gebindebildes angestellt, wobei eine mittlere Kontur als sinnvolle Profilierung ermittelt werden kann. Wichtig in diesem Zusammenhang ist die Betrachtung der Wege der einzelnen Artikel während ihrer Verschiebung, die stattfindenden Kollisionen, Gleitbewegungen und Abwälzungen mit bzw. an benachbarten Artikeln sowie auch sinnvolle und/oder notwendige Versperrungen einzelner Wege, um die Verschiebungen in der effektivsten Weise ablaufen zu lassen.

Die erfindungsgemäßen Schub- und/oder Anschlagleisten können wahlweise als integrierte Schubstangen ausgebildet oder als Einzelteile mit entsprechender Profilierung ausgebildet sein, die mit einer Schubstange verbunden und auswechselbar ausgebildet sein können. Bei existierenden Maschinen sind die Schubstangen oftmals in Form von Rundstangen (Rohr oder Vollmaterial) oder rechteckiges Rohr bzw. Stange ausgestaltet. Die erfindungsgemäße Schub- und/oder Anschlagleisten können wahlweise auch so ausgestaltet sein, dass die Schub- und/oder Anschlagleisten lösbar auf die vorhandene Schubstange z.B. auf- bzw. ansteckbar, auf bzw. anklippbar, angeschraubt oder angebracht werden. So können bspw. existierende Maschinen mittels der erfindungsgemäßen Technik nachgerüstet werden, um damit genestete Anordnungen von Artikelgruppen erzeugen zu können. Die jeweilige Ausführung der vorhandenen Schubstange kann durchaus beliebig sein. Es soll hiermit nur verdeutlicht werden, dass die erfindungsgemäße Schub- und/oder Anschlagleiste auch bei einer Nachrüstung ohne erheblichen konstruktiven Neuaufwand auswechselbar an die vorhandene Schubstange angebracht werden kann.

Weiterhin kann wahlweise an wenigstens einer seitlichen Flanke eines Nockens ein gegen Federkraft bewegliches und/oder manuell einstell- und fixierbares Leitelement zur Aufbringung einer an der zu verschiebenden Reihen von Artikeln angreifenden seitlichen Bewegungskomponente angeordnet sein. Auch können mehr solcher verstellbaren oder beweglichen Leitelemente vorgesehen sein, die vorzugsweise zur Beeinflussung der Verschiebebewegungen der Artikel beim Angreifen der Schubleiste bzw. der Anschlagleiste an die Artikelgruppen in geeigneter Weise beweglich sind. Das Leitelement ist vorzugsweise drehbeweglich um eine vertikale Achse an der Leiste verankert.

Es sei an dieser Stelle ergänzend erwähnt, dass die zu den Artikeln weisende und deren Außenkontur vorgebende Profilierung der Schub- bzw. Anschlagleisten in aller Regel unsymmetrisch zur Mittelebene ausgebildet ist, insbesondere bei Anordnungen mit einer geraden Anzahl von nebeneinander befindlichen Artikelreihen. Da die an den seitlichen Rändern befindlichen Artikel hierbei jeweils unterschiedliche Ausweichbewegungen machen, ist eine unsymmetrische Flankengestaltung der Profilierung sinnvoll, wie dies im Detail anhand der nachfolgenden Figurenbeschreibung verdeutlicht werden wird. Wie oben erwähnt, können jedoch auch symmetrisch profilierte Schub- bzw. Anschlagleisten eingesetzt werden, die bei zweckmäßiger Gestaltung ebenfalls zu den gewünschten Ergebnissen führen dürften.

Eine vorteilhafte Variante der erfindungsgemäßen Anordnung kann paarweise angeordnete und relativ zueinander in Transportrichtung verschiebbare Schubleisten vorsehen, die zudem wahlweise jeweils unterschiedlich profiliert sein können. So kann bspw. eine der Schubleisten hinsichtlich ihrer Profilierung der Randkontur der ursprünglichen Artikelformation angenähert sein bzw. dieser entsprechen, während die vertikal unmittelbar ober- oder unterhalb dieser Schubleiste angeordnete weitere Schubleiste in ihrer Profilierung ungefähr der zu erzielenden verdichteten oder genesteten Artikelformation entsprechen kann. Eine solche Anordnung paarweiser Schubleisten kann alternativ auch eine Verschiebbarkeit der beiden Schubleisten eines Paares in horizontaler Richtung quer zur Transportrichtung der Artikel vorsehen. Die Flanken der beiden übereinander liegenden und in horizontaler Richtung gegeneinander verschiebbaren Leisten werden je nach Bedarf zusammengeschoben, um eine gewünschte resultierende Profilierung zu erreichen. Es sei daher betont, dass die Schubleiste mit der Profilierung grundsätzlich auch mehrteilig ausgebildet sein kann, wobei die Teile relativ zueinander beweglich sein können. Die resultierende Profilierung der Schubleiste kann sich hierbei während des Formationsvorganges verändern, so dass die Artikel gezielt in eine gewünschte Richtung verschoben werden können, um schließlich die Zielformation zu erhalten, bei der die gegeneinander verschobenen Artikel in eine kompakte und verdichtete Anordnung gebracht sind.

Weiterhin ist an dieser Stelle zu erwähnen, dass eine Ausführungsvariante der Erfindung eine Gleitunterstützung für die mittels der Schubstange über eine fest stehende Fläche geschobenen Artikel vorsehen kann. Um den Reibwiderstand zwischen den Bodenseiten der Artikel und der Gleitoberfläche zu reduzieren, kann bspw. eine Plattenschmierung mittels Wasser oder einer anderen Flüssigkeit vorgesehen sein.

Es sei schließlich an dieser Stelle nochmals erwähnt, dass die Erfindung zu ihrer einwandfreien Funktion nicht nur die asymmetrisch profilierte Schub- und/oder Anschlagleiste benötigt, sondern gleichermaßen eine sich entlang des Verschiebewegs der Schub- oder Anschlagleiste verjüngende Transportstrecke für die Artikel, um diese um einen benötigten Weg seitlich gegeneinander zu schieben, so dass nicht nur in Längsrichtung eine dichtere Packung der Artikel gebildet wird, sondern ebenso in Querrichtung zur Transport- bzw. Förderrichtung. Dieser sich seitlich verjüngende bzw. eingeschnürte Strecken- bzw. Förderabschnitt für die Artikel ist besonders gut in der nachfolgenden Figurenbeschreibung verdeutlicht und nachvollziehbar.

Eine weitere Variante der erfindungsgemäßen Vorrichtung bzw. der in dieser Vorrichtung eingesetzten Schub- oder Anschlagleiste ermöglicht einen erleichterten Programmwechsel der mit der Vorrichtung beförderten und/oder verarbeiteten Produkte. Um bspw. für einen Programmwechsel von einer genesteten Verarbeitung mit wabenförmiger Verbundanordnung der beförderten Artikel auf eine normale Verarbeitung mit quadratischem oder rechteckigem Verbund der beförderten Artikel umschalten zu können, wäre normalerweise eine aufwändige Umrüstung die entweder einen Austausch oder ein Entfernen aller Schub- oder Anschlagleisten erforderlich macht. Vereinfachen könnte man dies beispielsweise dadurch, dass die Profilierungen von den mit den seitlichen Führungszugmitteln verbundenen Leisten selbst lösbar sein könnten. Hierfür eignen sich bspw. Rastverbindungen oder Schraubverbindungen. Bei einem solchen Programmwechsel müssten nun alle Formleisten mit ihren Profilierungen von den Schubstangen entfernt werden. Eine weitere noch vorteilhaftere Variante der Erfindung kann nun vorsehen, die Schubleisten selbst oder zumindest deren Strukturierungen bzw. Profilierungen um einen Winkel von wenigstens 90 Grad um ihre Längsachse zu verdrehen, wobei die Schubleisten bzw. die Strukturierungen oder Profilierungen in dieser Lage fixierbar sein müssen. Wahlweise können die Schubleisten oder ihre Profilierungen auch um ca. 180 Grad gedreht werden, so dass ihre hintere gerade Anlauffläche als Schubleiste genutzt werden könnte.

Die Erfindung wird nachfolgend anhand von Ausführungsbeispielen unter Bezugnahme auf die beiliegenden Zeichnungen näher erläutert. Die Figuren illustrieren und verdeutlichen nicht einschränkend zu verstehende Ausführungsbeispiele der vorliegenden Erfindung in ihren Details und Funktionen.
Fig. 1 zeigt eine schematische Draufsicht einer Ausführungsvariante einer Vorrichtung zur Bildung einer genesteten Anordnung von gruppierten Artikeln.
Fig. 2 zeigt mehrere Ansichten einer Schub- oder Anschlagleiste der erfindungsgemäßen Vorrichtung gemäß Fig. 1.
Fig. 3 zeigt ein mehreren Ansichten eine alternative Ausführungsvariante einer Schubleiste der Vorrichtung gemäß Fig. 1.
Fig. 4 zeigt in mehreren schematischen Ansichten den Bewegungsablauf beim Verschieben der Schubleiste zur Herstellung einer genesteten Anordnung einer 3x8-Gruppierung von Artikeln.
Fig. 5 zeigt in mehreren schematischen Ansichten den Bewegungsablauf beim Verschieben der Schubleiste zur Herstellung einer genesteten Anordnung einer 3x7-Gruppierung von Artikeln.
Fig. 6 zeigt in mehreren schematischen Ansichten den Bewegungsablauf beim Verschieben der Schubleiste zur Herstellung einer genesteten Anordnung einer kombinierten 4x7/3x7-Gruppierung von Artikeln.
Fig. 7 zeigt in mehreren schematischen Ansichten den Bewegungsablauf beim Verschieben der Schubleiste zur Herstellung einer genesteten Anordnung einer kombinierten 3x7/4x7-Gruppierung von Artikeln.
Fig. 8 zeigt die Vorrichtung zur Bildung einer genesteten Anordnung von gruppierten Artikeln in einer schematischen Seitenansicht.
Fig. 9 zeigt in einer Prinzipdarstellung eine Variante einer erfindungsgemäßen Schubleiste, die mehrere relativ zueinander bewegliche Leistenteile umfasst.

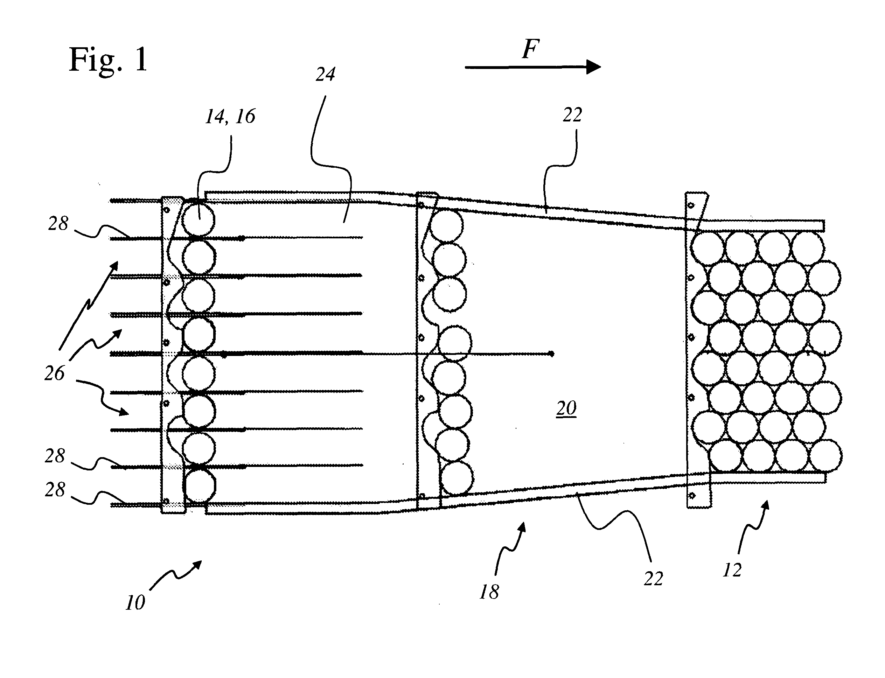

Die nachfolgend beschriebenen Figuren 1 bis 9 verdeutlichen mehrere Ausführungsvarianten bzw. Konfigurationen einer Vorrichtung 10 zur Bildung genesteter Anordnungen zu verpackender, in Gruppen 12 aufgeteilter, mehrreihig hintereinander angeordneter gleichartiger zylindrischer Artikel 14 innerhalb einer Verpackungsmaschine. Diese allgemein als Artikel 14 bezeichneten Gegenstände sind im vorliegenden Ausführungsbeispiel aufrecht stehend, in horizontaler Richtung beförderte Getränkebehälter 16 bzw. Flaschen. Die Vorrichtung 10 umfasst einen Transportweg 18 für die zuvor aus einem mehrreihigen Artikelstrom gebildete Gruppe 12 von Artikeln 14 bzw. Getränkebehältern 16, der sich in einem Teilabschnitt 20 in Förderrichtung F entlang seiner Längsseiten 22 verjüngt.

Wie die Draufsicht der Fig. 1 verdeutlicht, umfasst der Transportweg 18 eine Horizontalfördereinrichtung 24, bspw. eine Mattenkette oder Gliederkette o. dgl. zum Transport von mehreren Artikeln 14 bzw. Getränkebehältern 16 nebeneinander. Die einzelnen Reihen 26 sind voneinander durch sog. Gassenbleche 28 getrennt, die sich auch an den Rändern als äußere Begrenzungen befinden, so dass die Behälter 16 in linearer Förderrichtung F ohne seitlichen Kontakt zueinander befördert werden. Bereits im Bereich der Horizontalfördereinrichtung 24 mit den zur Trennung vorgesehenen Gassenblechen 28 wird eine asymmetrisch profilierte Schubleiste 30 von hinten an die Gruppe 12 herangeführt. Diese Schubleiste 30 übernimmt in dem sich verjüngenden Teilabschnitt 20 den Transport der Gruppe 12, da dort kein Förderboden mehr vorhanden ist, sondern eine Gleitfläche. Ggf. kann in diesem sich verjüngenden, seitlich eingeschnürten Bereich 20 eine Gleitunterstützung für die mittels der Schubstange bzw. Schubleiste 30 über die glatte Fläche geschobenen Artikel 14 bzw. Getränkebehälter 16 vorsehen sein. Um den Reibwiderstand zwischen den Bodenseiten der Artikel 14 und der Gleitoberfläche des Bereichs 20 zu reduzieren, kann bspw. eine Plattenschmierung mittels Wasser oder einer anderen Flüssigkeit vorgesehen sein.

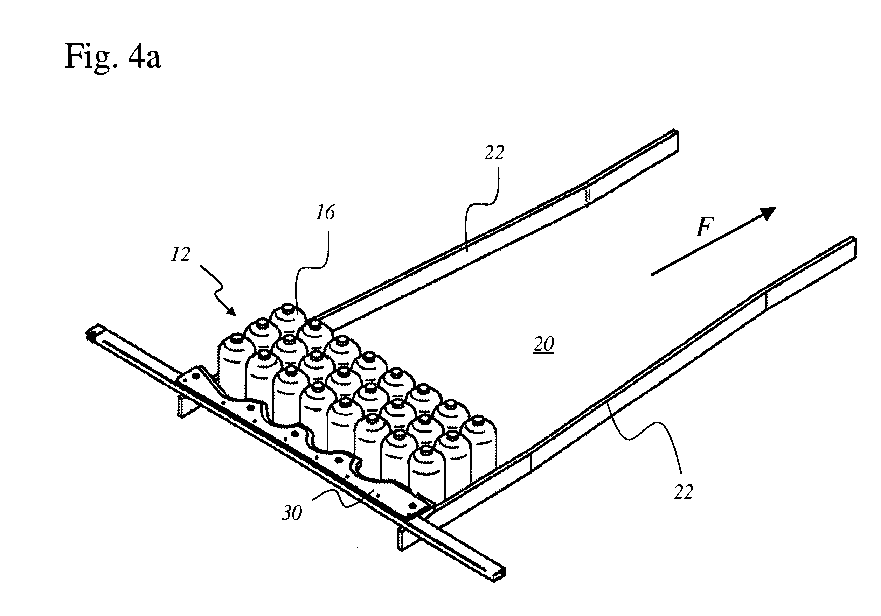

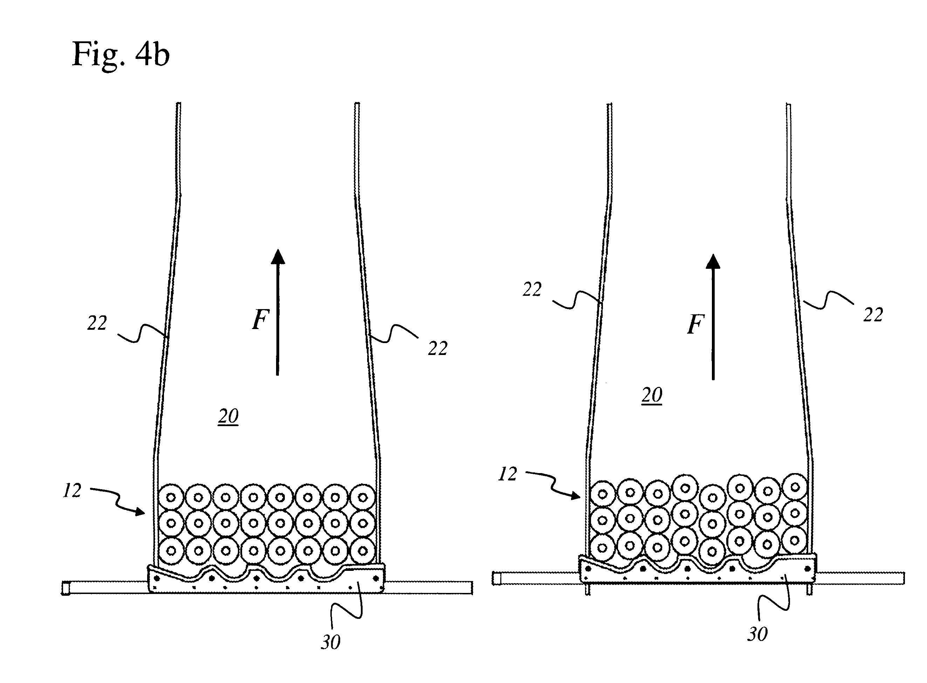

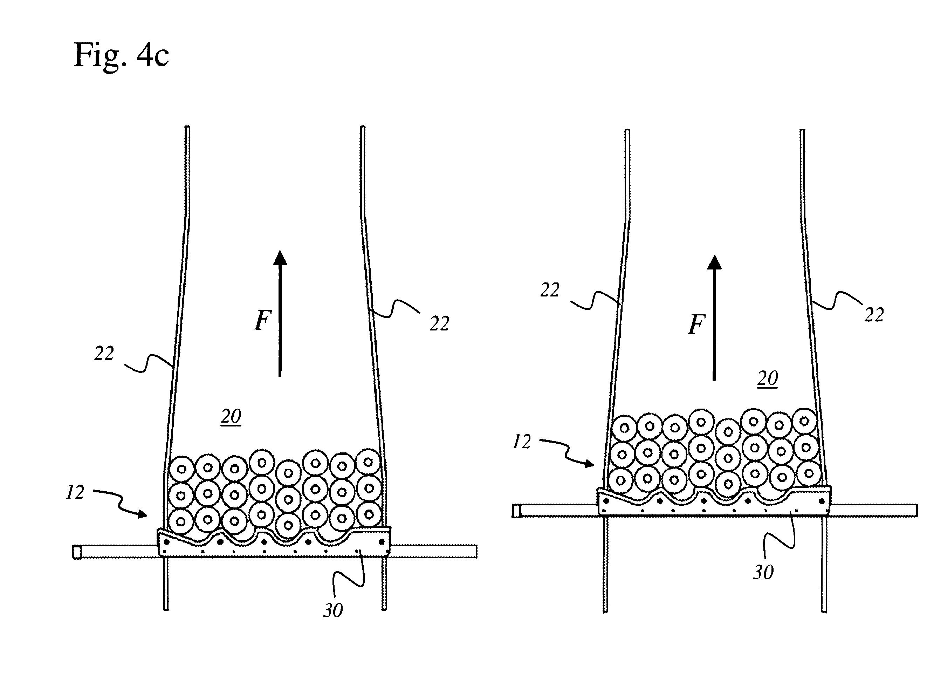

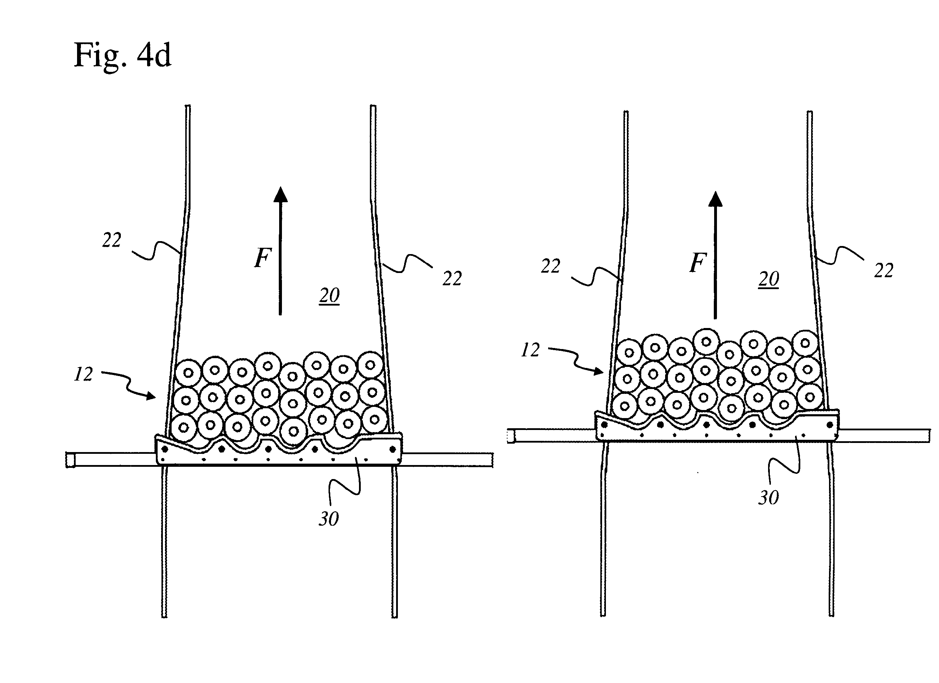

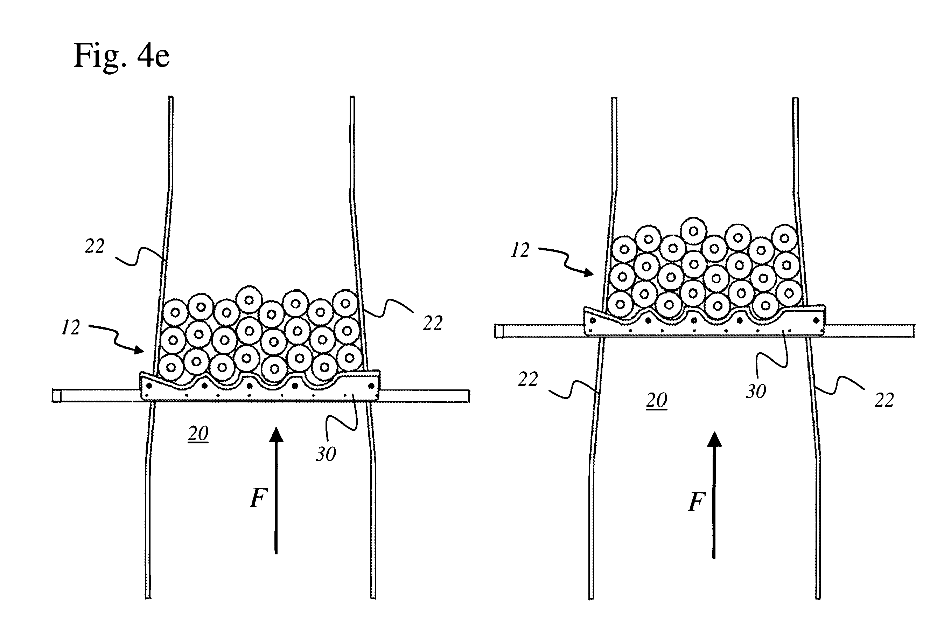

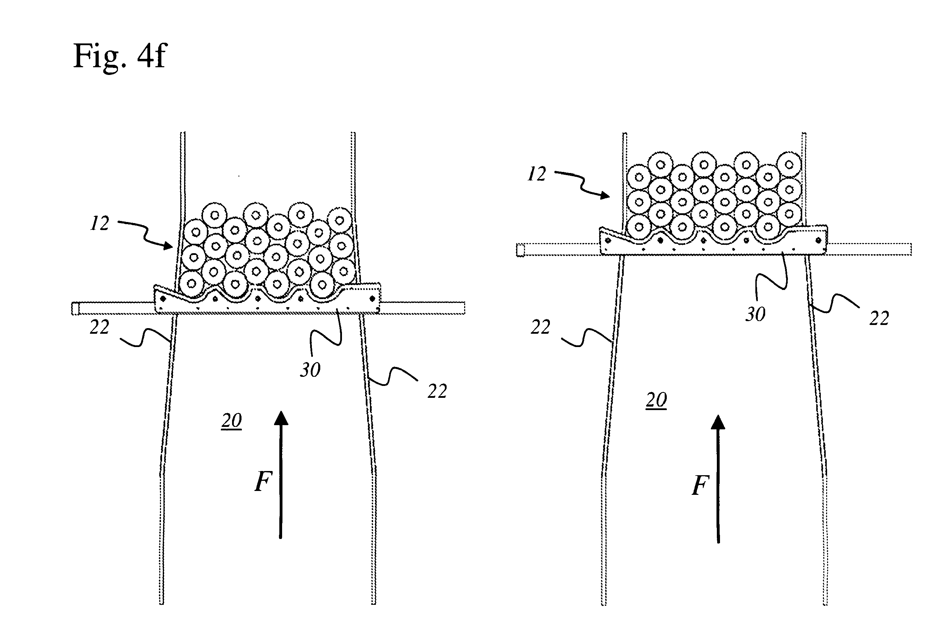

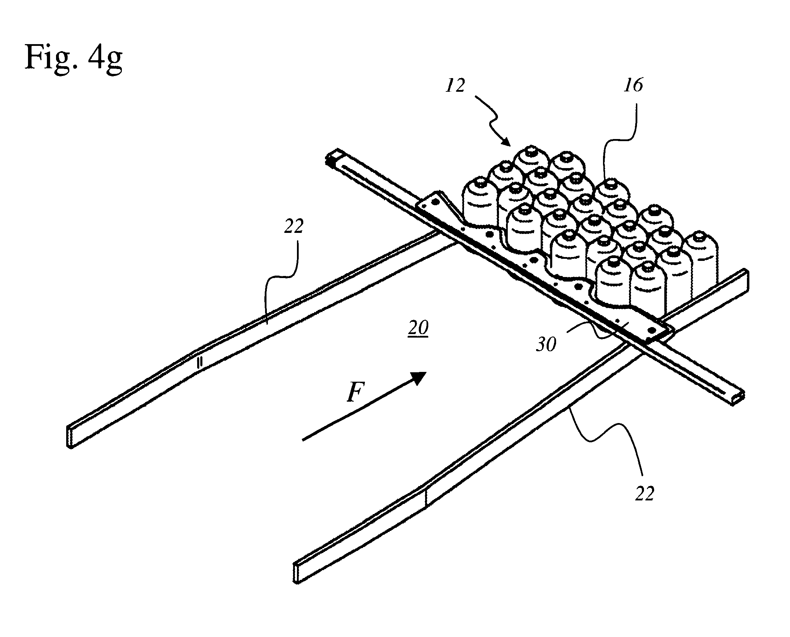

Die asymmetrisch profilierte Schubleiste 30 dient einerseits zum Transport der Gruppe 12 über die sich seitlich verjüngende Teilfläche 20 und sorgt andererseits durch ihre spezielle asymmetrische Profilierung und durch ihre Anlage an die hintere Stirnseite der Gruppe 12 von Artikeln 14 zur Überführung der Artikel 14 bzw. Getränkebehälter 16 in eine verdichtete bzw. nestartige Anordnung, wie sie rechts in der Fig. 1 in beispielhafter Weise als sog. 8x4-Anordnung verdeutlicht ist. Wie anhand der Figuren 4 bis 7 verdeutlicht wird, können jedoch auch andere Anordnungen in der gezeigten Weise verdichtet und in die sog. genestete Anordnung gebracht werden.

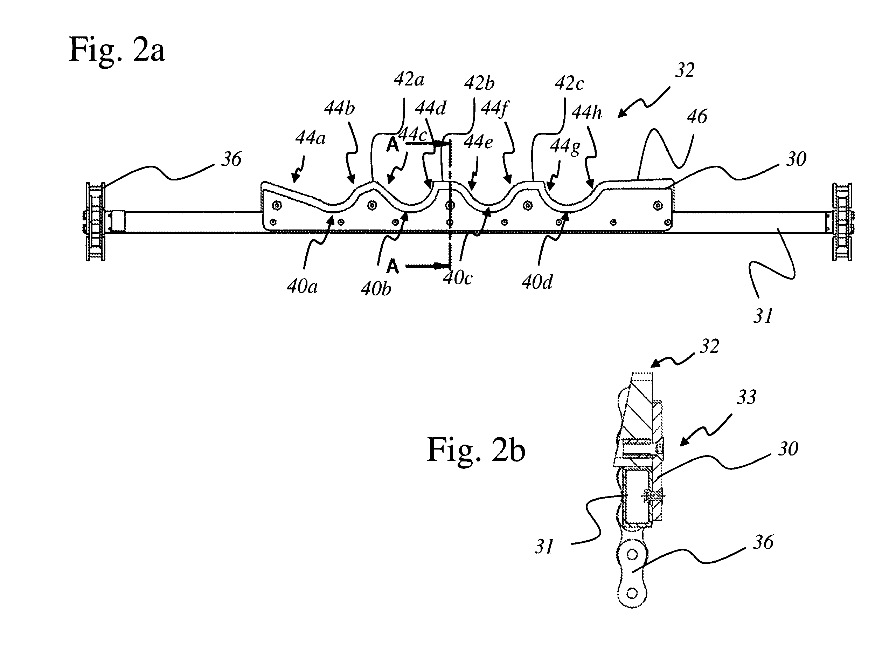

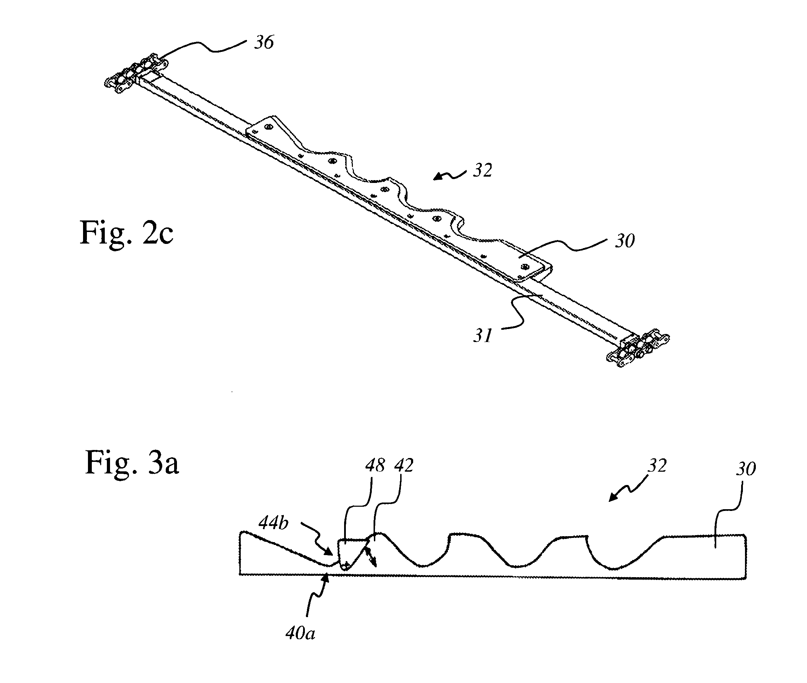

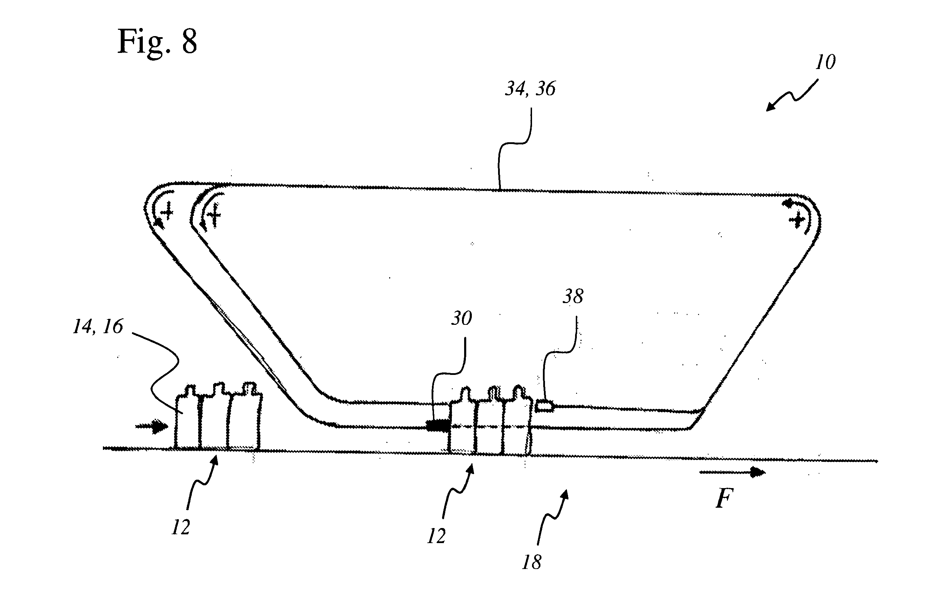

Die Schubleiste 30 weist eine zur Gruppe 12 der Artikel 14 gerichtete Strukturierung bzw. Profilierung 32 auf, die in Bezug auf eine (hier nicht dargestellte) parallel zur Förderrichtung F verlaufende Mittelachse bzw. vertikal stehende Mittelebene zur Schubleiste 30 mit einer Außenkontur der nestartigen Anordnung der Artikel 14 korrespondiert. Wie die Fig. 1 weiterhin verdeutlicht, ist jeder der Gruppen 12 eine separate Schubleiste 30 zugeordnet, die in synchronisierter Bewegung zu der die Artikel 14 bewegenden Fördereinrichtung 24 umlaufen bzw. zu den Artikelgruppen 12 herangeführt werden. Um dies zu gewährleisten, sind mehrere asymmetrisch profilierte Schubleisten 30 an seitlich entlang des Transportwegs 18 der Artikel 14 endlos umlaufenden Zugmitteln 34 in Gestalt von umlaufenden Rollenketten 36 angeordnet, so dass durch den Verlauf der Ketten 36 und der Steuerung ihrer Umlaufgeschwindigkeit die gewünschte Positionierung der Leisten 30 und deren Synchronisierung gewährleistet werden kann, wie dies in Fig. 2 und in Fig. 8 verdeutlicht ist.

Die Fig. 8 zeigt weiterhin, dass zusätzlich zu den von hinten angreifenden asymmetrisch profilierten Schubleisten 30 an der Vorderseite jeder Gruppe 12 von Artikeln 14 eine mit der Gruppe 12 entlang der Förderrichtung F mitbewegte Halteleiste 38 zur Anlage an die vorderen Artikel 14 der Gruppe 12. Auch diese Halteleisten 38 werden in vergleichbarer Weise wie die Schubleisten 30 mittels endlos umlaufender Zugmittel 34 bzw. Rollenketten 36 in synchronisierter Bewegung mit den beförderten Artikeln 14 mitlaufen bzw. mitbewegt. Die Halteleisten 38 dienen in erster Linie zur Aufrechterhaltung des Artikelverbundes, da aufgrund der Verschiebung durch die Schubleisten 30 und die sich verjüngenden seitlichen Führungsleisten 22 des Transportwegs 18 die Gefahr von Ablösungen einzelner Artikel 14 nach vorne aus der Gruppe 12 besteht, was bei der späteren Verpackung und Palettierung zu Störungen und Behinderungen führen kann, insbesondere wenn der abgelöste Artikel 14 entweder fehlt, sich an einer falschen Position am Gebinde befindet oder umfällt und dadurch zu Störungen im Förder- und/oder Verpackungsablauf führen kann.

Der Vollständigkeit halber sei darauf hingewiesen, dass die zu arrangierenden Gruppen 12 in Fig. 1 teilweise nicht vollständig eingezeichnet sind. Von den beiden linken Gruppen 12 sind lediglich die hinteren Artikel 14 eingezeichnet, an denen die Schubleisten 30 schiebend angreifen, während die bereits umgeordnete rechte Gruppe 12 die vollständige, bereits verdichtete bzw. genestete 8x4-Anordnung zeigt.

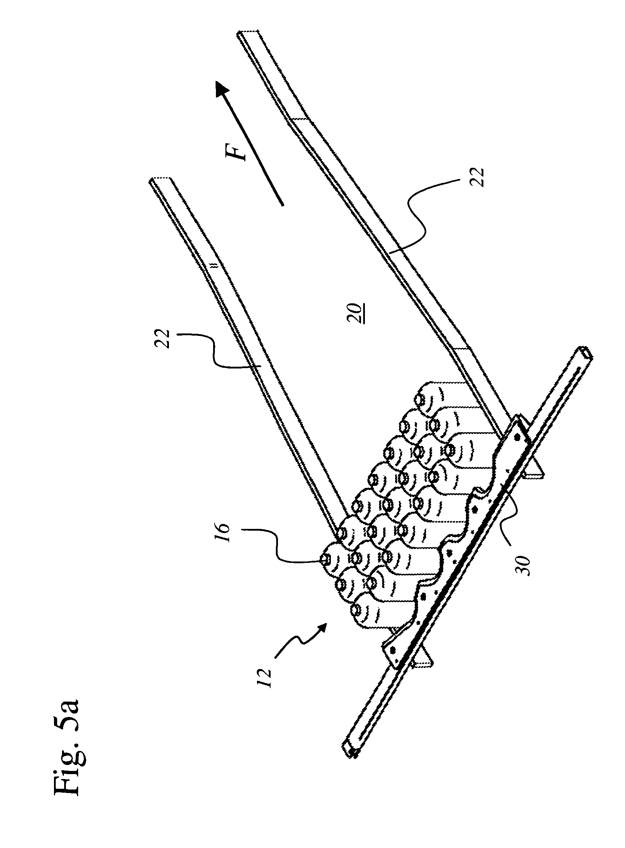

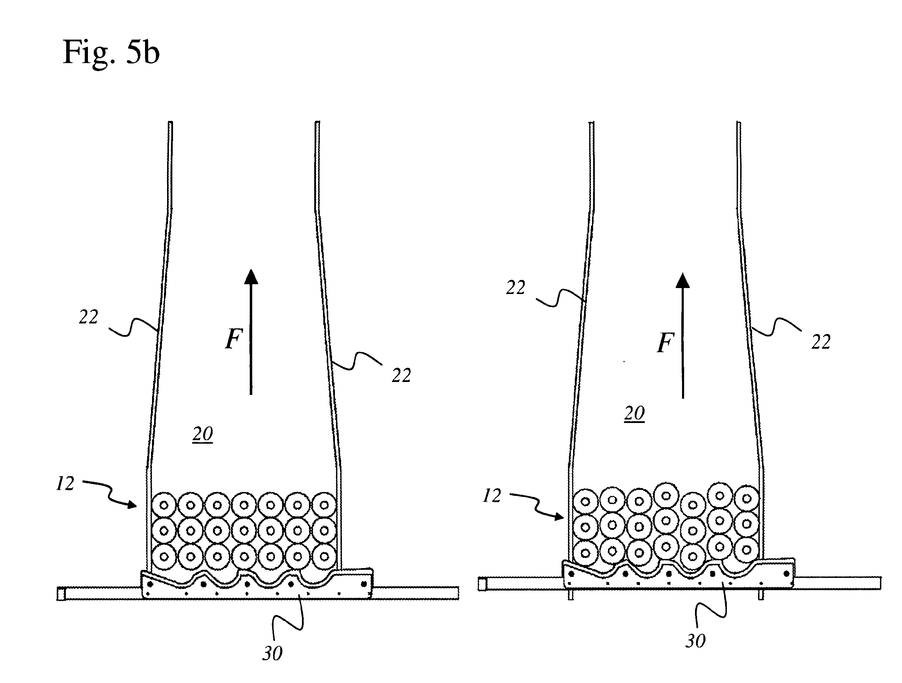

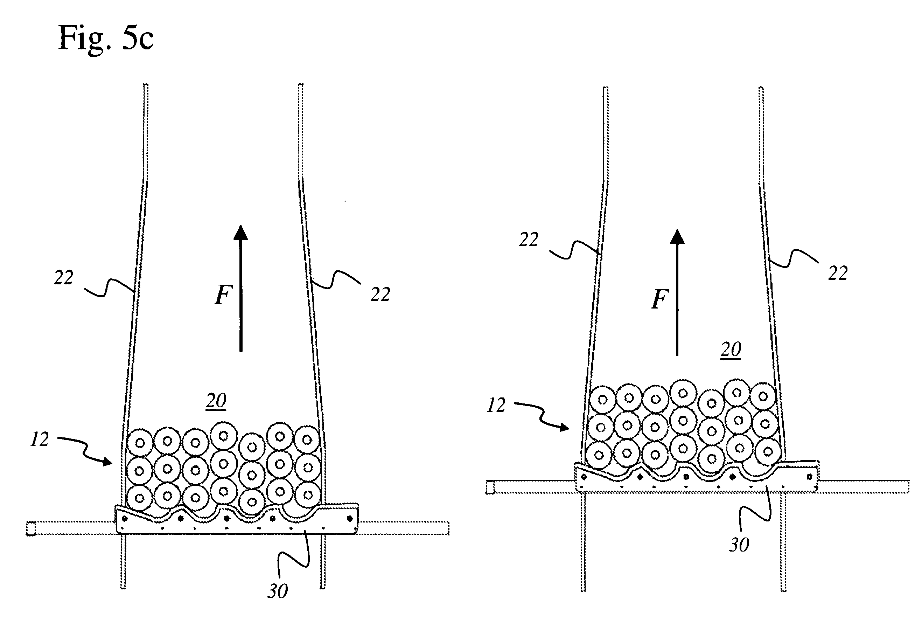

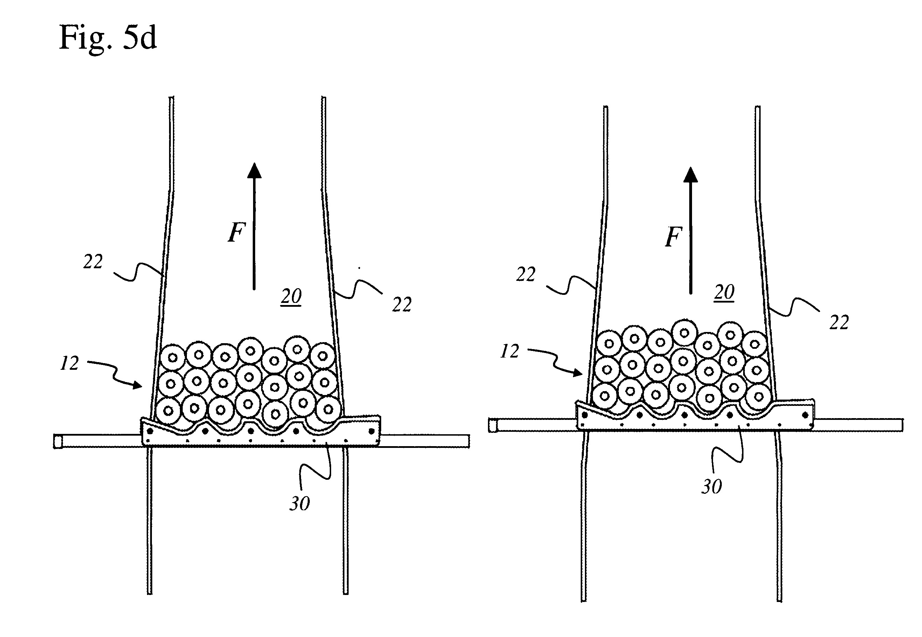

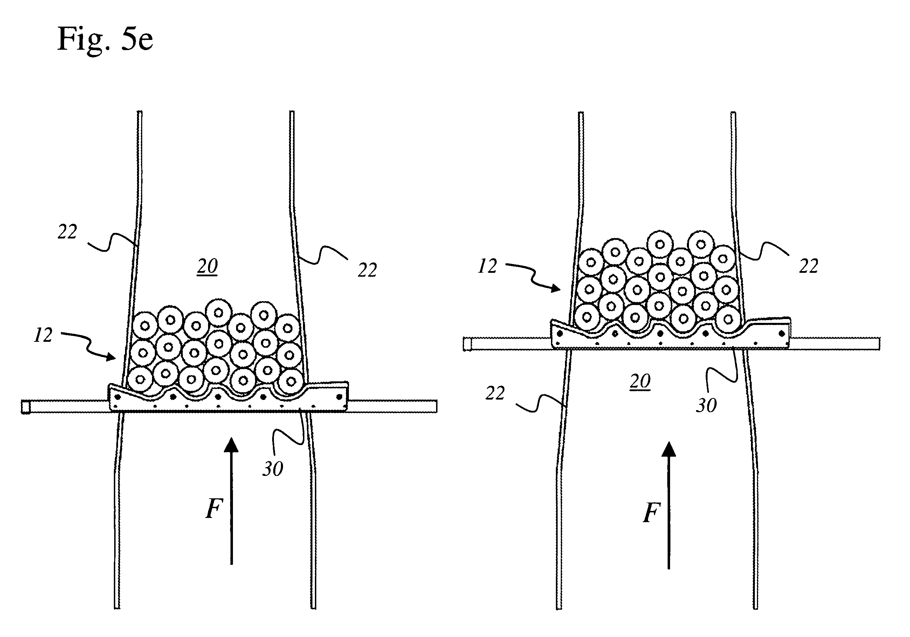

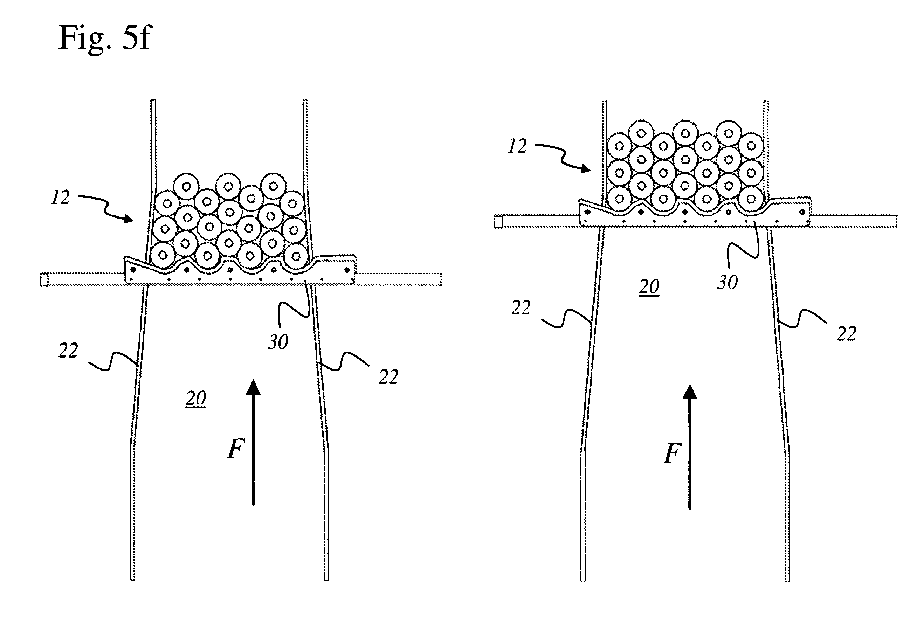

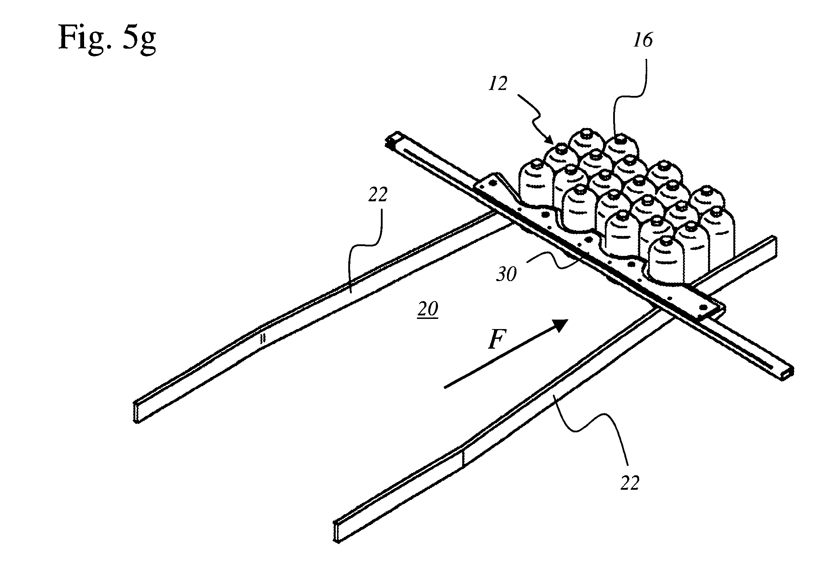

Die Figuren 2a, 2b und 2c zeigen verschiedene Ansichten einer Ausführungsvariante der erfindungsgemäßen Schubleiste 30, die an ihrer zu der Gruppe 12 von Artikeln 14 bzw. Getränkebehältern 16 weisenden Seite eine Profilierung 32 aufweist. Die Profilierung 32 korrespondiert mit einer Außenkontur einer nestartigen Anordnung der Artikel 14. So weisen die Schubleisten 30 ein Wellen- oder Nockenprofil auf, bei dem die alternierend angeordneten Mulden 40 und Nocken 42 jeweils eine geeignete Profilhöhe aufweisen, so dass die Artikel in der gewünschten Weise verschoben werden können. Zudem weisen die alternierend angeordneten Mulden 40 und Nocken 42 jeweils einen Abstand auf, der geringer ist als ein Artikeldurchmesser, wie anhand der in Fig. 1 rechts eingezeichneten genesteten Gruppierung von Artikeln verdeutlicht ist. Wie die Figur 2a es verdeutlicht, sind die Flanken 44 der Profilierung 32 unsymmetrisch und bei den insgesamt drei vorhandenen Nocken 42 nicht gleich ausgebildet. Die dargestellte Profilierung ist abgestimmt auf eine Gruppe 12 von insgesamt acht nebeneinander befindlichen Artikelreihen, die zu einem 8x3-, 8x4-, 8x5- oder 8xn-Verbund (vgl. Fig. 1) in genesteter Anordnung überführt werden. In der endgültigen Anordnung nimmt jede der Mulden 40 einen zylindrischen Behälter 16 auf, während an der Stirnseite jeder Nocke 42 ebenfalls ein zylindrischer Behälter 16 anliegt. Wie anhand der Figuren 5 bis 7 verdeutlicht ist, können die gezeigten Profile 32 jedoch auch für ungerade Anordnungen eingesetzt werden, da hierbei ein kürzerer Abschnitt der seitlichen Anlagefläche 46 genutzt wird; die achte Flanke 44h kommt zwar zum Einsatz, nicht jedoch die sich nach rechts daran anschließende seitliche Anlagefläche 46.

Während der Überführung der Behälter 16 in diese Verbundanordnung gleiten jedoch zunächst zwei nebeneinander befindliche Behälter 16 von der ganz links angeordneten ersten Flanke 44a nach rechts, bis der zweite Behälter 16 von links von dem ganz links befindlichen Behälter 16 aus der ersten Mulde 40a in Richtung zur zweiten Flanke 44b und an die Stirnseite der ersten Nocke 42a gedrückt wird (vgl. Fig. 1). Um diese Gleitbewegung entlang der ersten Flanke 44a zu erleichtern, ist diese kaum gekrümmt, sondern relativ flach und gerade ausgebildet. Die zur ersten Nocke 42a weisende zweite Flanke 44b ist ebenfalls relativ flach und geradlinig, ebenso wie die dritte Flanke 44c, welche die erste Nocke 42a mit der zweiten Mulde 40b verbindet. Entlang dieser dritten Flanke 44c gleitet ein Behälter 16 während der Bildung der genesteten Anordnung nach rechts in die zweite Mulde 40b, in der er schließlich zum Liegen kommt, rechts begrenzt und umfasst von der vierten Flanke 44d, die eine ausgeprägte konkave Krümmung aufweist, die mit der zylindrischen Außenkontur des Behälters 16 korrespondiert. Da an dieser vierten Flanke 44d keine Gleitbewegung erfolgt, sondern lediglich eine Auffangbewegung des von links dritten Behälters 16, ist es sinnvoll, sie an die Behälterkontur anzupassen.

Die fünfte Flanke 44e, welche die zweite Nocke 42b mit der dritten Mulde 40c verbindet, weist dagegen eine konvexe Krümmung auf, die ein Gleiten eines Behälters 16 entlang dieser Flanke 44e nach links unterstützt. Eine fast symmetrische konvexe Krümmung weist die sich nach rechts anschließende sechste Flanke 44f in Richtung zur dritten Nocke 42c auf, was ebenfalls ein Gleiten eines Behälters 16 entlang dieser Flanke 44f erleichtert. Die siebte Flanke 44g, die zwischen dritter Nocke 42c und vierter Mulde 40d angeordnet ist, weist dagegen eine ausgeprägt konkave Krümmung auf, da sie zur Aufnahme eines sich von rechts nähernden Behälters 16 dient und nicht nach links in Richtung zur dritten Nocke 42c hin überwunden wird. Die achte Flanke 44h ist wieder annähernd gestreckt und führt in flachem Winkel zur seitlichen Anlagefläche 46, welche an die Längsseite 22 des Transportwegs 18 grenzt.

Die Figuren 1 und 2a verdeutlichen im Zusammenhang die Bewegungen der Behälter 16 während der Förderbewegung entlang der Förderrichtung F von links nach rechts. Wahlweise kann die Kontur der Flanken 44, Mulden 40 und Nocken 42 auch von der gezeigten Profilierung 32 abweichen; wichtig ist dabei jedoch, dass zuvor die Bewegungen der einzelnen Behälter 16 ermittelt und eine möglichst ruckfreie und störungsfreie seitliche Verschiebung gewährleistet werden kann, um die gewünschte genestete Anordnung entsprechend Fig. 1 (ganz rechts) der Gruppe 12 von Artikeln 14 zu erreichen.

Die Schubleiste 30 ist in der in den Figuren 2a bis 2c gezeigten Weise an beiden Seiten an Rollenketten 36 befestigt, die für die gewünschte Vorschubbewegung der Schubleisten 30 sorgen. Wie weiterhin insbesondere anhand der Schnittdarstellung A-A der Fig. 2b verdeutlicht ist, kann die profilierte Leiste 32 an der Querstange 31 der Schubleiste 30 mittels Verschraubungen 33 auswechselbar befestigt sein, so dass je nach Bedarf unterschiedliche Profilierungen 32 gewählt und in der Vorrichtung 10 montiert werden können.

Da es sinnvoll sein kann, einen Programmwechsel von einer genesteten Verarbeitung mit wabenförmiger Verbundanordnung der beförderten Artikel 14 auf eine normale Verarbeitung mit hier nicht dargestelltem quadratischem oder rechteckigem Verbund der beförderten Artikel 14 durchführen zu können, kann eine hier nicht dargestellte Variante der in Fig. 2 gezeigten Schubleiste 30 eine Verdrehbarkeit um ihre Längsachse vorsehen. Anstelle einer aufwändigen Umrüstung aller Schub- oder Anschlagleisten 30 kann vorgesehen sein, dass die Schubleisten 30 selbst oder zumindest ihre Strukturierungen bzw. Profilierungen 32 um einen Winkel von wenigstens 90 Grad um ihre Längsachse verdreht werden können, wobei die Schubleisten 30 bzw. die Strukturierungen oder Profilierungen 32 in dieser veränderten Lage fixierbar sein müssen. Wahlweise können die Schubleisten 30 oder ihre Profilierungen 32 auch um ca. 180 Grad gedreht werden, so dass ihre hinteren geraden Anlaufflächen als Schubleisten zur Förderung der Artikel 14 genutzt werden könnten. Um die Verdrehbarkeit zu ermöglichen, können bspw. die Verankerungen der Schubleisten 30 in den seitlichen, für den Vorschub sorgenden Zugmitteln 34, die im gezeigten Ausführungsbeispiel als Rollenketten 36 ausgebildet sind, verdrehbar ausgebildet sein.

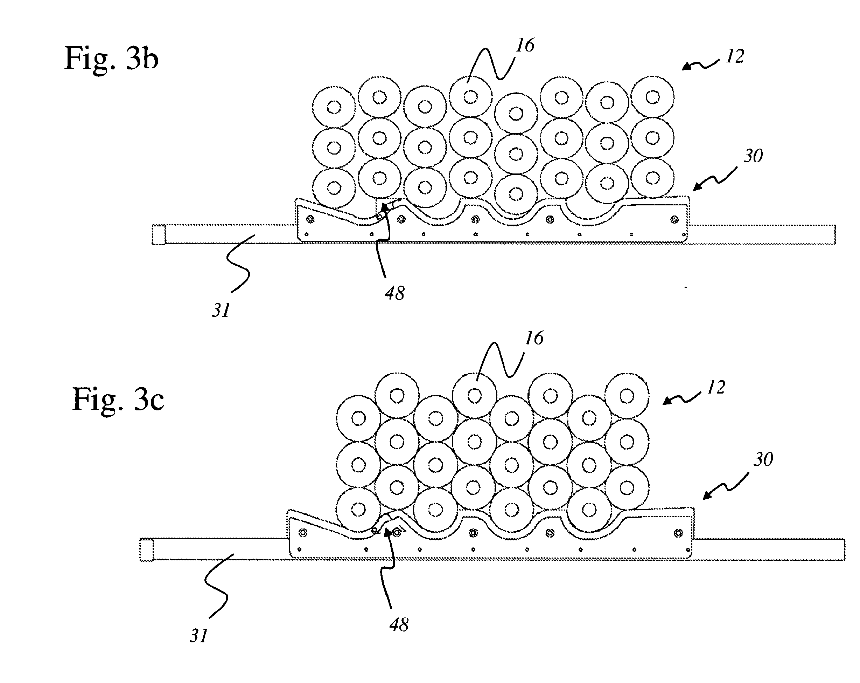

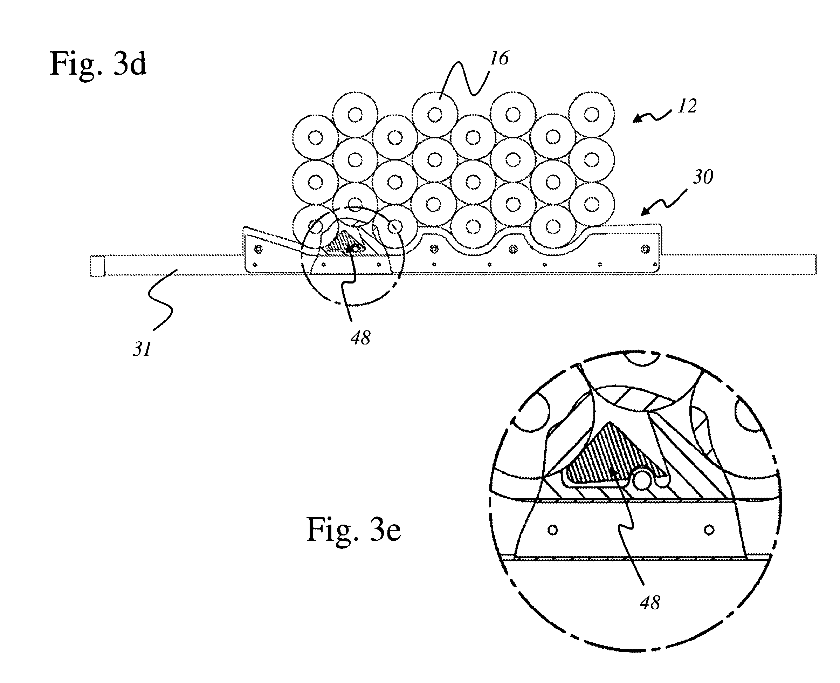

Wahlweise kann entsprechend Fig. 3 an wenigstens einer seitlichen Flanke 44 ― hier an der zweiten Flanke 44b ― eines Nockens 42 ein gegen Federkraft bewegliches und/oder manuell einstell- und fixierbares Leitelement 48 zur Aufbringung einer an der zu verschiebenden Reihen von Artikeln 14 angreifenden seitlichen Bewegungskomponente angeordnet sein. Auch können mehrere solcher verstellbaren oder beweglichen Leitelemente 48 vorgesehen sein, die vorzugsweise zur Beeinflussung der Verschiebebewegungen der Artikel 14 beim Angreifen der Schubleiste 30 an die Artikelgruppen 12 in geeigneter Weise beweglich sind. Wie sich anhand der Fig. 1 und der Fig. 3b nachvollziehen lässt, kann das schwenkbare Leitelement 48 die Verschiebebewegung des zweiten Behälters 16 von links in Richtung zum ersten Nocken 42a unterstützen, ohne dass die Anlagebewegung des ganz linken Behälters 16 in die erste Mulde 40a behindert wird. Sobald sich der linke Behälter 16 in die Mulde 40a legt, kann das Leitelement 48 nach rechts ausweichen. Andererseits verhindert es jedoch, dass sich der zweite Behälter 16 in die erste Mulde 40a legt. Das Leitelement 48 bzw. mehrere solcher Leitelemente 48 beeinflussen somit die richtige Platzierung der Behälter 16 entsprechend der vorhandenen Profilierung 32. Detaildarstellung des Leitelements 48 sind in den Teilschnittansichten der Figuren 3d und 3e dargestellt.

Die Fig. 4 zeigt in mehreren schematischen Ansichten den Bewegungsablauf beim Verschieben der Schubleiste zur Herstellung einer genesteten Anordnung einer 3x8-Gruppierung von Artikeln. So verdeutlicht die Fig. 4a in einer perspektivischen Darstellung die Ausgangssituation der noch nicht umgruppierten 3x8-Anordnung der Gruppe 12 von Getränkebehältern 16, die mittels der Schubleiste 30 in die genestete Anordnung entsprechend Fig. 4f und 4g gebracht werden. Die Fig. 4b zeigt links die Ausgangssituation und rechts den ersten Angriff der asymmetrisch profilierten Schubleiste 30 an die Behältergruppe 12, so dass diese allmählich (Fig. 4c, Fig. 4d, Fig. 4e) im Bereich des Teilabschnitts 20 immer weiter verschoben und entlang der eingeschnürten Längsseiten bzw. der seitlichen Begrenzungsführungen 22 befördert und dadurch quer zur Förderrichtung F gegeneinander verschoben werden, bis die gewünschte Endlage entsprechend Fig. 4f (rechts) und Fig. 4g erreicht ist. Im Unterschied zu den nachfolgend erläuterten Anordnungen liegt die rechte Reihe von Behältern 16 vollständig an der seitlichen Anlagefläche 46 an, die quer zur Förderrichtung F ausgerichtet ist.

Die Fig. 5 zeigt in mehreren schematischen Ansichten den Bewegungsablauf beim Verschieben der Schubleiste zur Herstellung einer genesteten Anordnung einer 3x7-Gruppierung von Artikeln. So verdeutlicht die Fig. 5a in einer perspektivischen Darstellung die Ausgangssituation der noch nicht umgruppierten 3x7-Anordnung der Gruppe 12 von Getränkebehältern 16, die mittels der Schubleiste 30 in die genestete Anordnung entsprechend Fig. 5f und 5g gebracht werden. Die Fig. 5b zeigt links die Ausgangssituation und rechts den ersten Angriff der asymmetrisch profilierten Schubleiste 30 an die Behältergruppe 12, so dass diese allmählich (Fig. 5c, Fig. 5d, Fig. 5e) im Bereich des Teilabschnitts 20 immer weiter verschoben und entlang der eingeschnürten Längsseiten bzw. der seitlichen Begrenzungsführungen 22 befördert und dadurch quer zur Förderrichtung F gegeneinander verschoben werden, bis die gewünschte Endlage entsprechend Fig. 5f (rechts) und Fig. 5g erreicht ist. Im Unterschied zur oben erläuterten 3x8-Anordnung liegt die rechte Reihe von Behältern 16 nicht an der seitlichen Anlagefläche 46 an, die quer zur Förderrichtung F ausgerichtet ist, sondern an der rechts davon befindlichen Flanke der Profilierung.

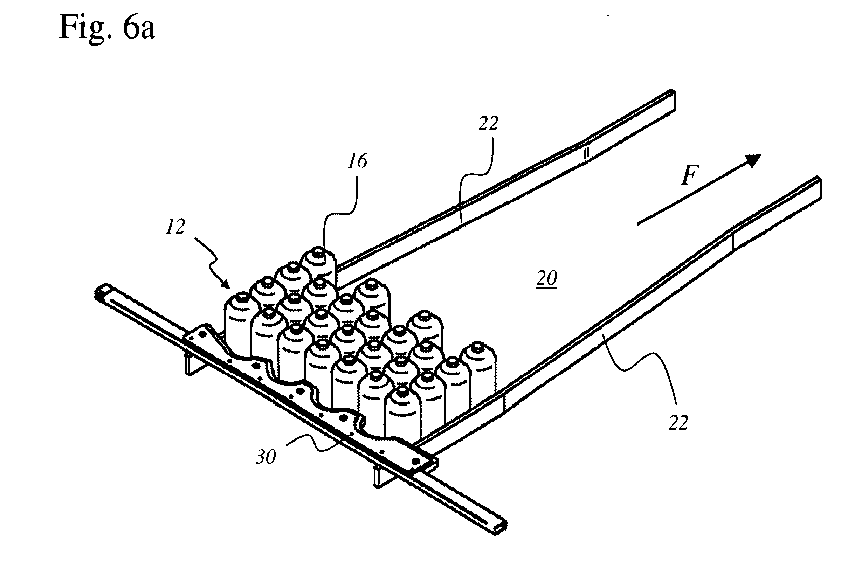

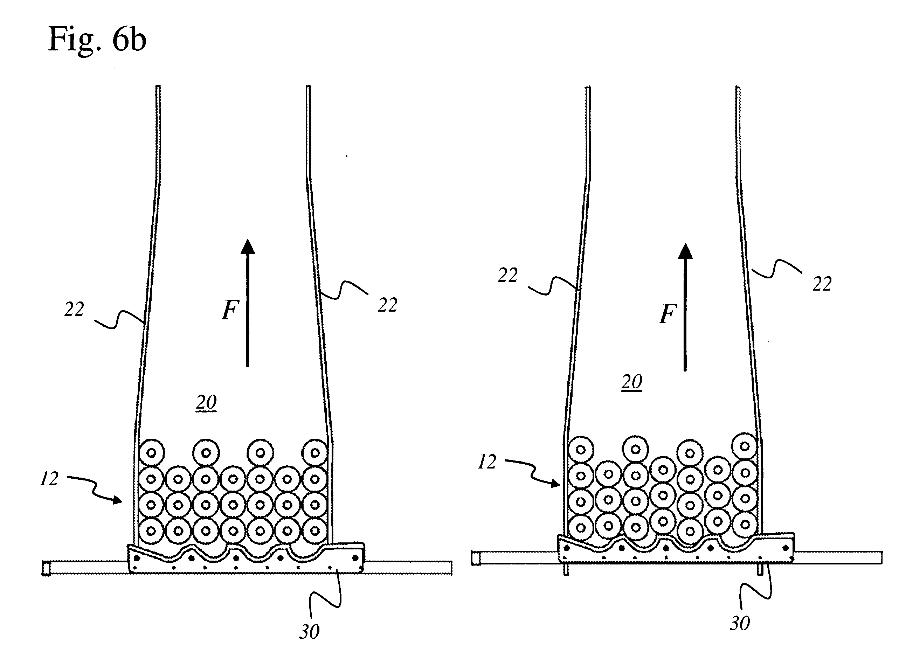

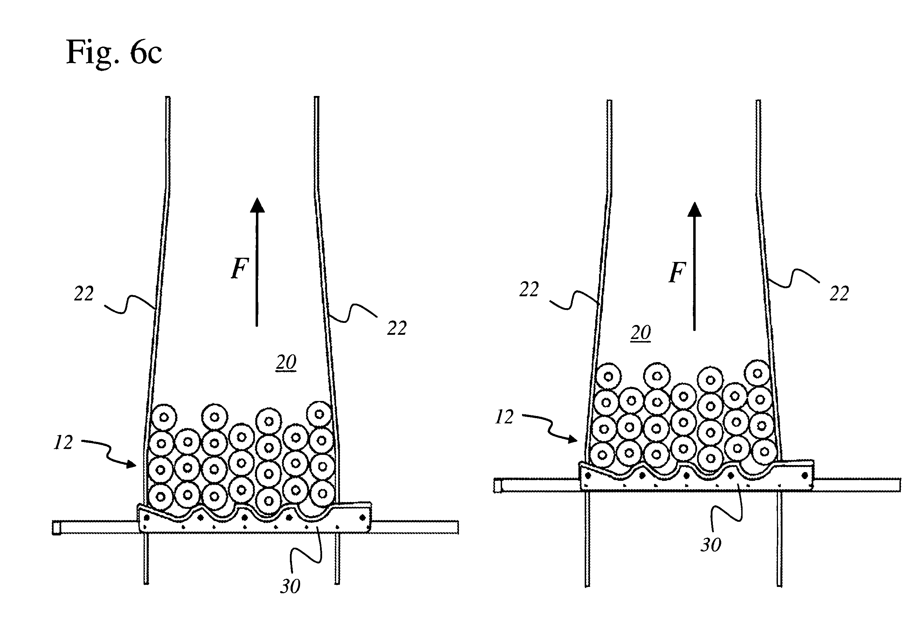

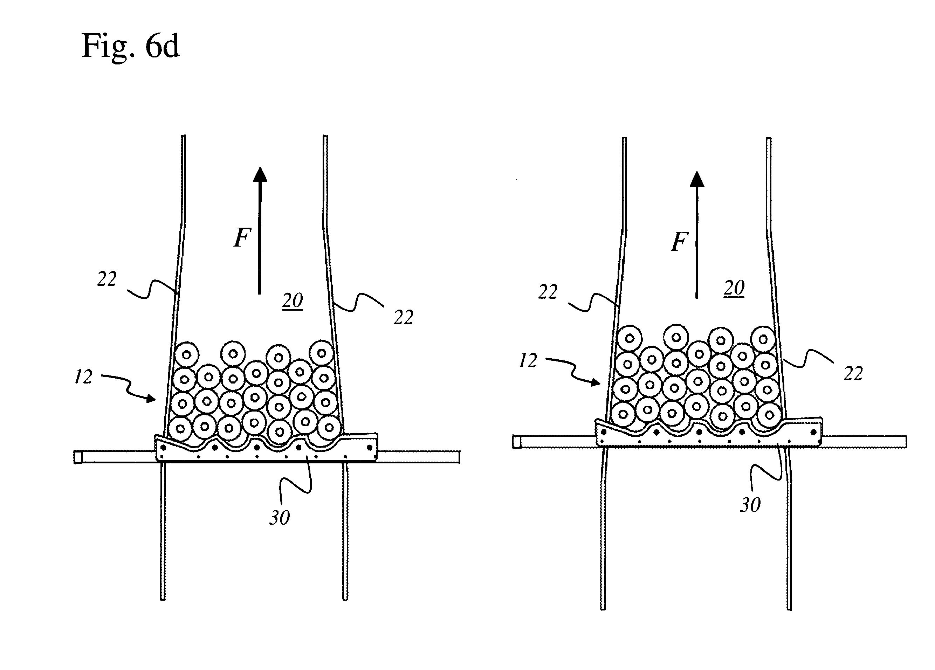

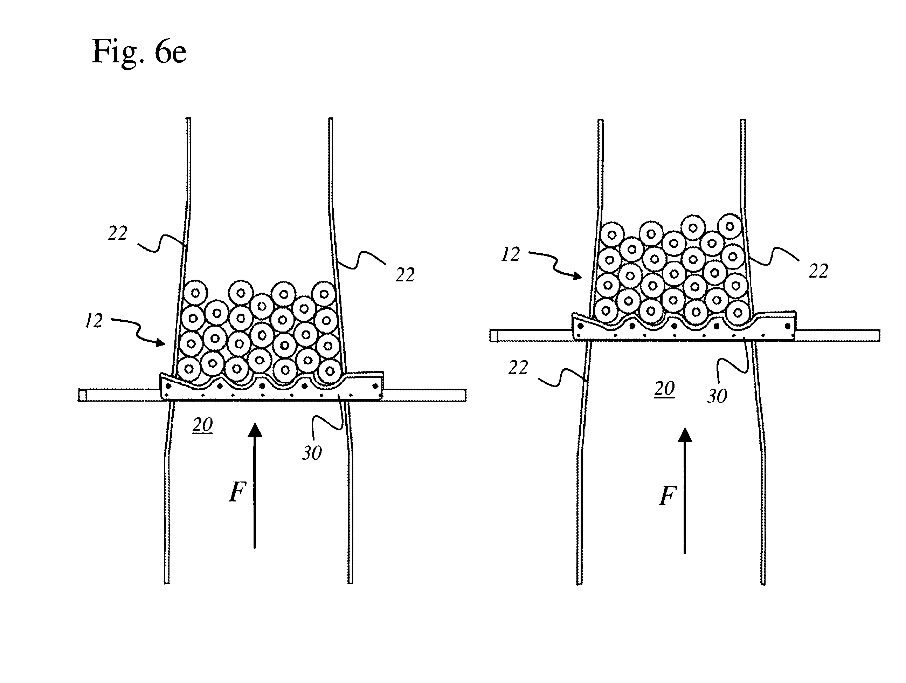

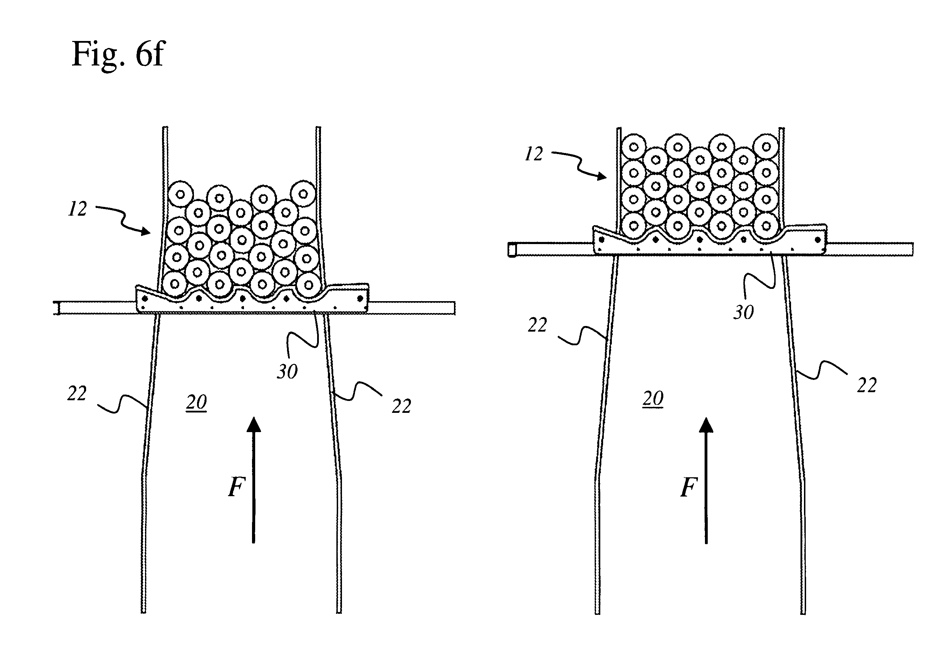

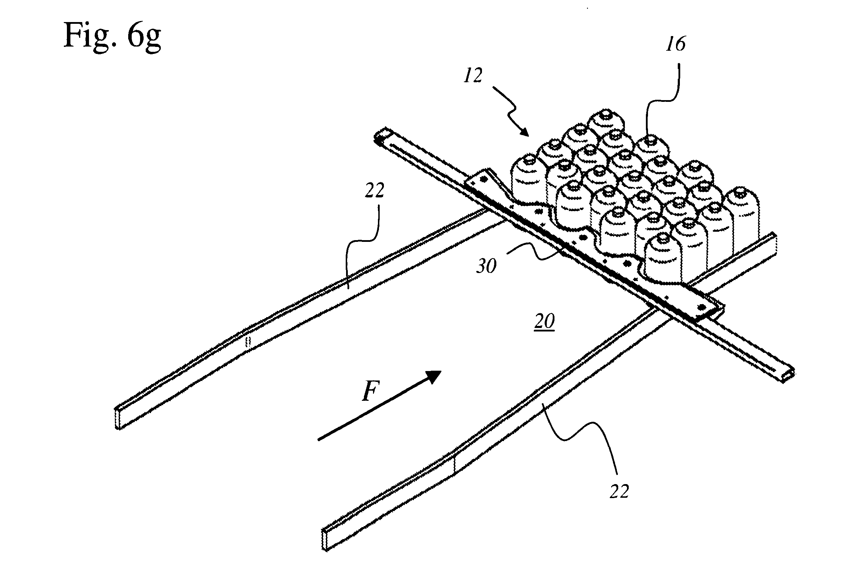

Die Fig. 6 zeigt in mehreren schematischen Ansichten den Bewegungsablauf beim Verschieben der Schubleiste zur Herstellung einer genesteten Anordnung einer kombinierten 4x7/3x7-Gruppierung von Artikeln. Die äußeren Reihen weisen jeweils vier hintereinander angeordnete Behälter 16 auf, während die sich nach innen daran anschließenden Reihen jeweils drei hintereinander angeordnete Behälter 16 aufweisen, ebenso wie die mittig angeordnete Reihe. Die links und rechts von der mittleren Reihe befindlichen inneren Reihen weisen wiederum vier hintereinander angeordnete Behälter 16 auf (vgl. Fig. 6b ff.). So verdeutlicht die Fig. 6a in einer perspektivischen Darstellung die Ausgangssituation der noch nicht umgruppierten 4x7/3x7-Anordnung der Gruppe 12 von Getränkebehältern 16, die mittels der Schubleiste 30 in die genestete Anordnung entsprechend Fig. 6f und 6g gebracht werden. Die Fig. 6b zeigt links die Ausgangssituation und rechts den ersten Angriff der asymmetrisch profilierten Schubleiste 30 an die Behältergruppe 12, so dass diese allmählich (Fig. 6c, Fig. 6d, Fig. 6e) im Bereich des Teilabschnitts 20 immer weiter verschoben und entlang der eingeschnürten Längsseiten bzw. der seitlichen Begrenzungsführungen 22 befördert und dadurch quer zur Förderrichtung F gegeneinander verschoben werden, bis die gewünschte Endlage entsprechend Fig. 6f (rechts) und Fig. 6g erreicht ist. Im Unterschied zur oben erläuterten 3x8-Anordnung liegt die rechte Reihe von Behältern 16 nicht an der seitlichen Anlagefläche 46 an, die quer zur Förderrichtung F ausgerichtet ist, sondern an der rechts davon befindlichen Flanke der Profilierung.

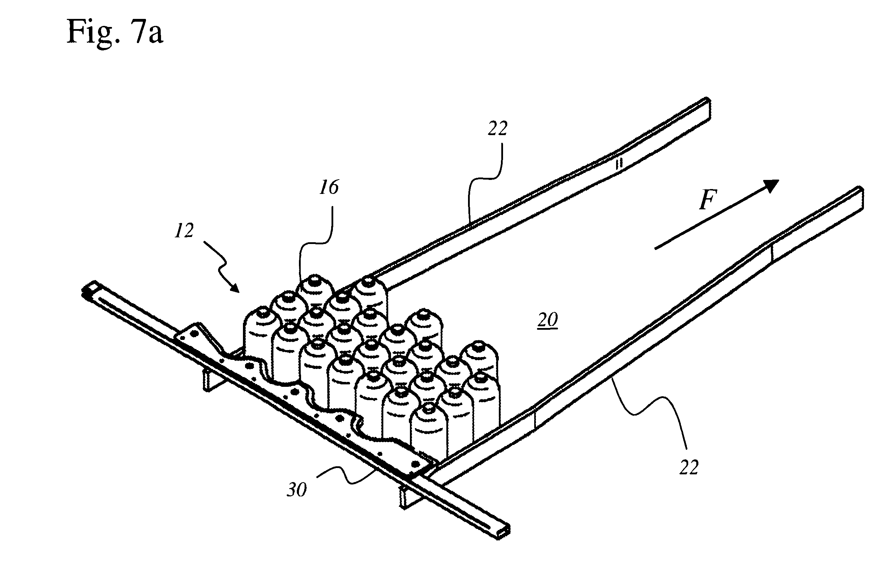

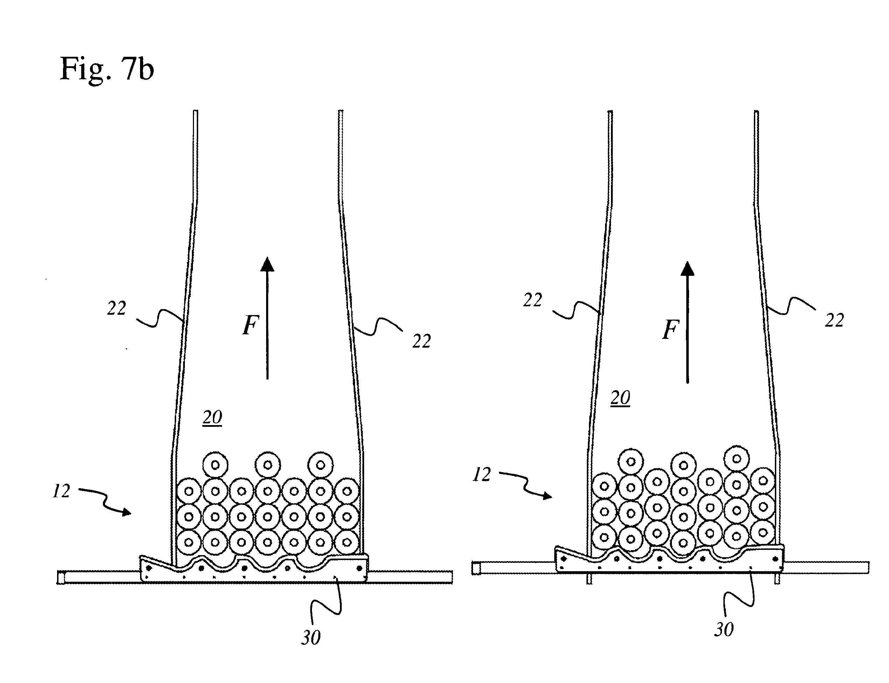

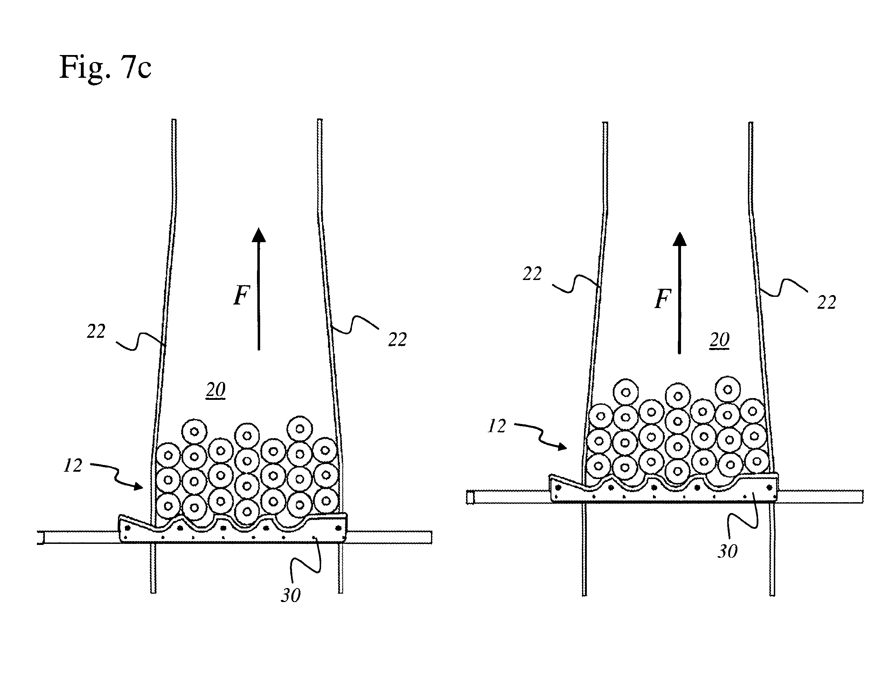

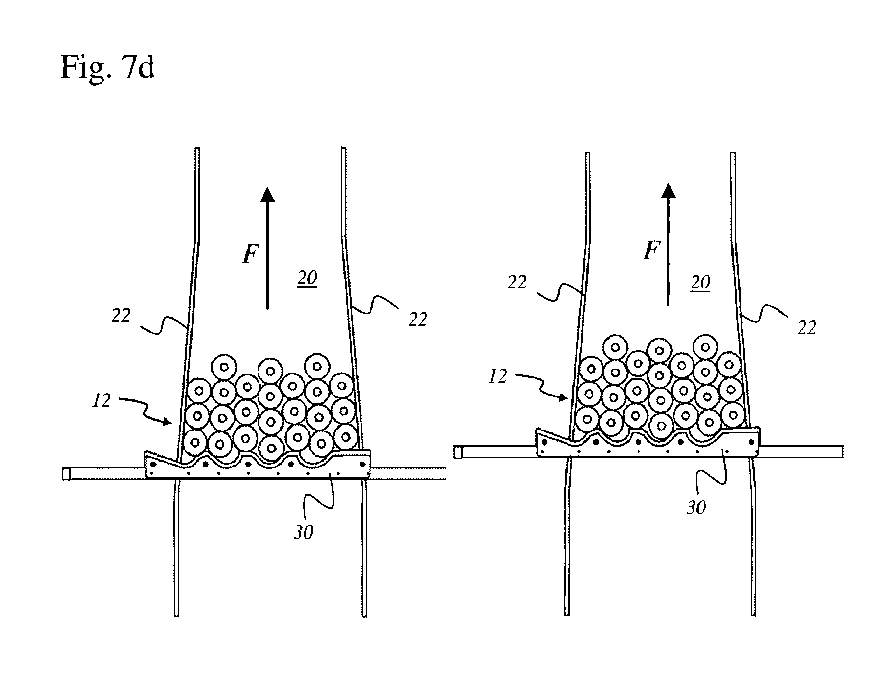

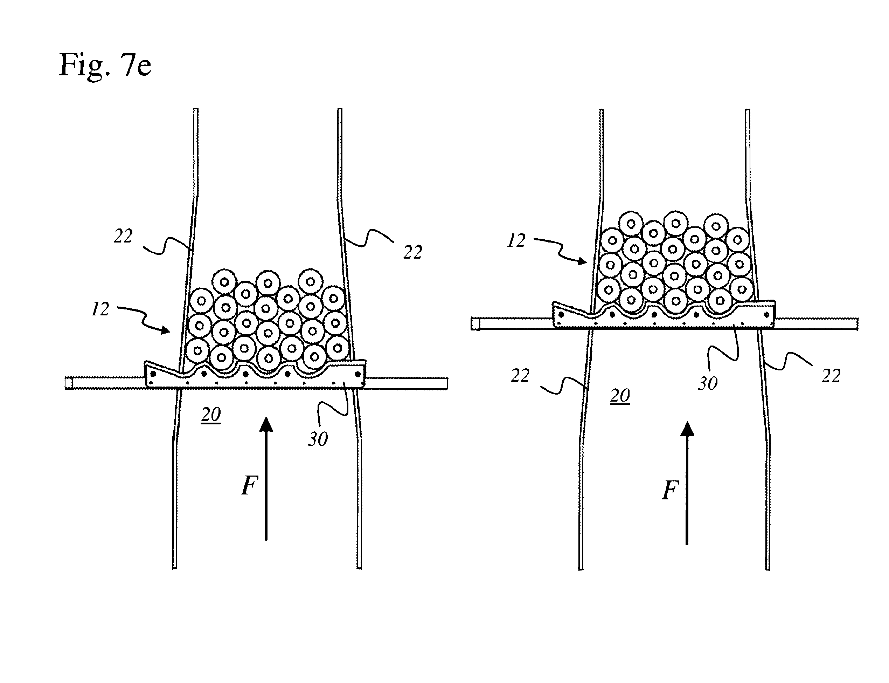

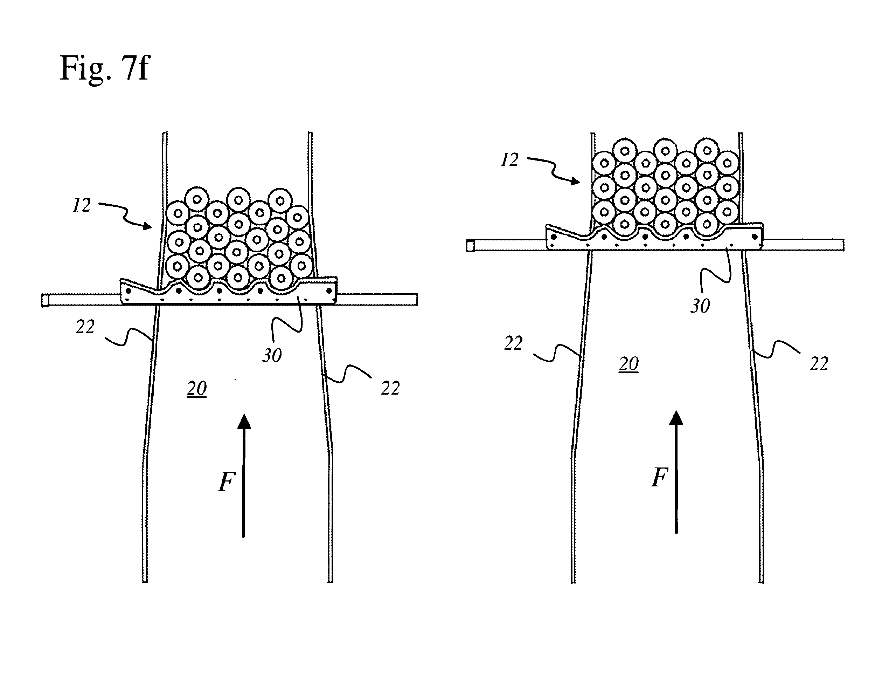

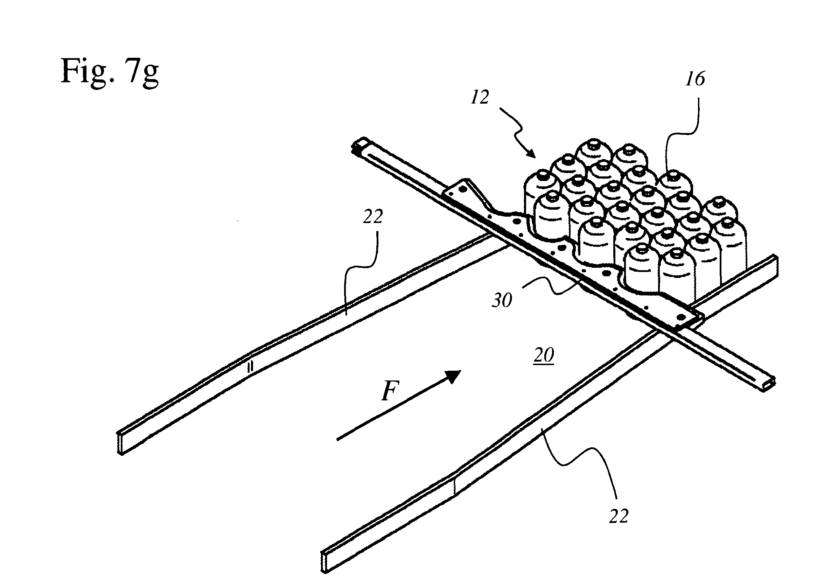

Die Fig. 7 zeigt in mehreren schematischen Ansichten den Bewegungsablauf beim Verschieben der Schubleiste zur Herstellung einer genesteten Anordnung einer kombinierten 3x7/4x7-Gruppierung von Artikeln. Die äußeren Reihen weisen jeweils drei hintereinander angeordnete Behälter 16 auf, während die sich nach innen daran anschließenden Reihen jeweils vier hintereinander angeordnete Behälter 16 aufweisen, ebenso wie die mittig angeordnete Reihe. Die links und rechts von der mittleren Reihe befindlichen inneren Reihen weisen wiederum drei hintereinander angeordnete Behälter 16 auf (vgl. Fig. 7b ff.). So verdeutlicht die Fig. 7a in einer perspektivischen Darstellung die Ausgangssituation der noch nicht umgruppierten 3x7/4x7-Anordnung der Gruppe 12 von Getränkebehältern 16, die mittels der Schubleiste 30 in die genestete Anordnung entsprechend Fig. 7f und 7g gebracht werden. Die Fig. 7b zeigt links die Ausgangssituation und rechts den ersten Angriff der asymmetrisch profilierten Schubleiste 30 an die Behältergruppe 12, so dass diese allmählich (Fig. 7c, Fig. 7d, Fig. 7e) im Bereich des Teilabschnitts 20 immer weiter verschoben und entlang der eingeschnürten Längsseiten bzw. der seitlichen Begrenzungsführungen 22 befördert und dadurch quer zur Förderrichtung F gegeneinander verschoben werden, bis die gewünschte Endlage entsprechend Fig. 7f (rechts) und Fig. 7g erreicht ist. Im Unterschied zur oben erläuterten 3x8-Anordnung liegt die rechte Reihe von Behältern 16 nicht an der seitlichen Anlagefläche 46 an, die quer zur Förderrichtung F ausgerichtet ist, sondern an der rechts davon befindlichen Flanke der Profilierung.

Die entsprechend Fig. 1 in die verdichtete und genestete 8x4-Anordnung oder in eine hier nicht dargestellte andere Anordnung gebrachte Gruppe 12 wird anschließend verpackt, insbesondere mittels einer um die Artikelgruppe geschlagenen Schrumpffolie, die durch Wärmeeinwirkung fest um die Artikel 14 gespannt wird und auf diese Weise ein leicht transportables, stapelbares und palettierbares Gebinde bildet. Ein solches Gebinde ist aufgrund der engen Packung und der aneinander liegenden Mantelflächen der Behälter 16 sehr formstabil und neigt kaum zum Verwinden oder zur Verformung, so dass sehr stabile Stapelanordnungen möglich sind, bspw. beim Palettieren der Gebinde.

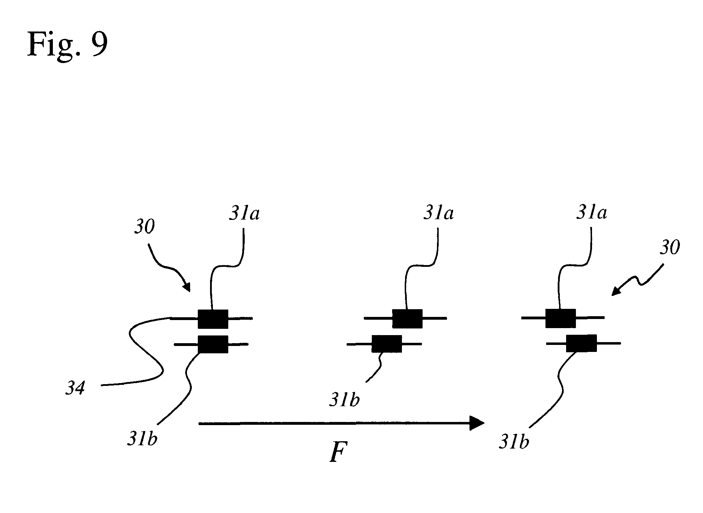

Die Prinzipdarstellung der Fig. 9 zeigt in einer Seitenansicht eine Variante einer erfindungsgemäßen Schubleiste 30, die mehrere relativ zueinander bewegliche Leistenteile 31 a und 31 b umfasst. So sieht eine vorteilhafte Variante der erfindungsgemäßen Anordnung paarweise angeordnete und relativ zueinander in Transportrichtung F verschiebbare Schubleistenteile 31 a und 31 b vor, die zudem jeweils unterschiedlich profiliert sind. So kann bspw. der obere Schubleistenteil 31 a hinsichtlich seiner Profilierung der Randkontur der ursprünglichen Artikelformation angenähert sein bzw. dieser entsprechen, während der unmittelbar darunter angeordnete weitere Schubleistenteil 31 b in seiner Profilierung ungefähr der zu erzielenden verdichteten oder genesteten Artikelformation entspricht. Da beide Schubleistenteile 31 a und 31b jeweils über ein separates Zugmittel 34 zur Erzeugung der umlaufenden Längsbewegung verfügen, können Verschiebungen entsprechend der mittleren und rechten Position problemlos erzeugt werden. So kann zunächst die Ursprungsprofilierung der oberen Leiste 31 a voreilen und im späteren Förderverlauf der unteren Leiste 31 b nacheilen, so dass deren Profilierung die Endkontur des Gebindebildes vorgibt.

Eine solche Anordnung paarweiser Schubleistenteile 31 a und 31 b kann alternativ oder zusätzlich auch eine Verschiebbarkeit der beiden Schubleistenteile 31 a und 31 b des Paares in horizontaler Richtung quer zur Transportrichtung F der Artikel vorsehen. Die Flanken der beiden übereinander liegenden und in horizontaler Richtung gegeneinander verschiebbaren Leisten 31 a und 31 b werden hierbei je nach Bedarf zusammengeschoben, um eine gewünschte resultierende Profilierung zu erreichen. Es sei daher betont, dass die Schubleiste 30 mit der Profilierung grundsätzlich auch mehrteilig ausgebildet sein kann, wobei die Teile relativ zueinander beweglich sein können. Die resultierende Profilierung der Schubleiste 30 kann sich hierbei während des Formationsvorganges verändern, so dass die Artikel gezielt in eine gewünschte Richtung verschoben werden können, um schließlich die Zielformation zu erhalten, bei der die gegeneinander verschobenen Artikel in eine kompakte und verdichtete Anordnung gebracht sind.

Grundsätzlich können auch mehr als zwei Leistenteile 31 a und 31 b zum Einsatz kommen, um bspw. bei größeren Gebindeformationen die gewünschte Verschiebung und Gruppierung der Artikel und die gewünschten verdichteten Gebindebilder zu erzeugen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Vorrichtung, Vorrichtung zur Bildung einer genesteten Anordnung von Artikeln oder Getränkebehältern
- 12: Gruppe
- 14: Artikel
- 16: Getränkebehälter
- 18: Transportweg
- 20: Teilabschnitt
- 22: Längsseiten / seitliche Begrenzungsführung
- 24: Horizontalfördereinrichtung
- 26: Reihe
- 28: Gassenblech
- 30: Schubleiste
- 31a: oberer Leistenteil
- 31b: unterer Leistenteil
- 32: Profilierung
- 34: Zugmittel
- 36: Rollenkette
- 38: Halteleiste
- 40: Mulde
- 40a, 40b, 40c, 40d: erste, zwei, dritte, vierte Mulde
- 42: Nocke
- 42a, 42b, 42c: erste, zweite, dritte Nocke
- 44: Flanke
- 44a, 44b, 44c, 44d, 44e, 44f, 44g, 44h: erste, zwei, dritte, vierte, fünfte, sechste, siebte, achte Flanke
- 46: seitliche Anlagefläche / vierte Nocke
- 48: Leitelement
- F: Förderrichtung

## Patentansprüche

1. Verfahren zur Bildung einer verdichteten Anordnung zu verpackender, in Gruppen (12) aufgeteilter, vorzugsweise mehrreihig hintereinander angeordneter, vorzugsweise gleichartiger Artikel (14), insbesondere zylindrischer Artikel (14) wie Getränkebehälter (16), Flaschen, Dosen oder dgl. innerhalb einer Verpackungsmaschine, wobei die Gruppe (12) von Artikeln (14) zumindest in einem Teilabschnitt (20) ihres Transportweges (18), insbesondere in einem sich in Förderrichtung (F) entlang der Längsseiten (22) verjüngenden Bereich, durch die Verpackungsmaschine mittels wenigstens einer regelmäßig oder unregelmäßig profilierten oder asymmetrisch geformten Leiste (30), welche an einer Stirnseite der Gruppe (12) von Artikeln (14), insbesondere in Förderrichtung (F) an der Hinterseite der Gruppe (12) von Artikeln (14) anliegt, geführt wird und dabei zumindest einzelne der Artikel (14) der Gruppe (12) gegeneinander in die verdichtete Anordnung verschoben werden, wobei die Leiste (30) an ihrer zu der Gruppe (12) von Artikeln (14) weisenden Seite eine Profilierung (32) aufweist, die mit einer Außenkontur einer in verdichtete Anordnung verschobenen Gruppe (12) von Artikeln (14) korrespondiert, **dadurch gekennzeichnet, dass** die Leiste (30) ein Wellen- oder Nockenprofil mit alternierend angeordneten Mulden (40) und Nocken (42), die jeweils einen Abstand aufweisen, der geringer ist, als ein Artikeldurchmesser sowie Flanken (44) aufweist, wobei in der endgültigen Anordnung jede Mulde (40) einen Artikel (14) aufnimmt, während an der Stirnseite jeder Nocke (42) ebenfalls ein Artikel (14) anliegt und wobei Artikel (14) während der Bildung der verdichteten Anordnung entlang Flanken (44a, 44b, 44c, 44e, 44f, 44g, 44h) gleiten.

2. Verfahren nach Anspruch 1, wobei die Flanken (44) unsymmetrisch und nicht gleich ausgebildet sind.

3. Verfahren nach Anspruch 1 oder 2, wobei entlang der Profilierung (32) gleitende Artikel (14) während der Bildung der genesteten Anordnung von Flanken (44d) aufgefangen werden.

4. Verfahren nach einem der vorherigen Ansprüche, bei dem der Teilabschnitt (20) des Transportweges (18) mit den sich verjüngenden Längsseiten (22) eine Auflagefläche zur gleitenden Schubbewegung der Artikel (14) aufweist, die mittels der an der Hinterseite der Gruppe (12) angreifenden, als Schubleiste (30) wirkenden profilierten Leiste in Transportrichtung (F) geschoben werden.

5. Verfahren nach einem der vorherigen Ansprüche, bei dem die Artikel (14) in mehreren parallelen, voneinander abgetrennten Einzelreihen (26) in horizontaler Richtung befördert und auf einen sich in Förderrichtung (F) entlang der Längsseiten (22) verjüngenden Bereich ohne Reihenabtrennungen überführt werden, innerhalb dessen jede Gruppe (12) von mehreren Artikeln (14) mittels der in Förderrichtung (F) von hinten an die Gruppe (12) heranbewegter profilierten Schubleiste (30) in einer in mehrere Richtungen wirkenden Versatz- und/oder Verschiebebewegung der Artikel (14) gegeneinander in die verdichtete bzw. nestartige Anordnung gebracht wird.

6. Verfahren nach einem der vorherigen Ansprüche, bei dem sich die hintersten Artikel (14) jeder Gruppe (12) beim Angriff der profilierten Schubleiste (30) während deren Bewegung entlang des sich verjüngenden Bereichs (20) der Konturierung (32) der Schubleiste (30) anpassen und in die nestartige Anordnung verschoben werden.

7. Verfahren nach einem der vorherigen Ansprüche, bei dem nach der Verschiebung der Artikel (14) der in Transportrichtung (F) hintere Artikel (14) einer Reihe (26) in einer Mulde (40) der profilierten Schubleiste (30) und der in Transportrichtung (F) hintere Artikel (14) einer benachbarten Reihe (26) an einem Vorsprung bzw. Nocken (42) der Schubleiste (30) anliegt.

8. Verfahren nach einem der Ansprüche 1 bis 3, bei dem der Teilabschnitt (20) des Transportweges (18) mit den sich verjüngenden Längsseiten (22) eine Transportebene mit sich bewegender Auflagefläche zum stehenden Transport der Artikel (14) aufweist, welche mittels der an der Vorderseite der Gruppe (12) angreifenden, als profilierte Anschlagleiste zur Verzögerung der Gruppe (12) wirkenden profilierten Leiste entgegen der Transportrichtung (F) verzögert werden.

9. Verfahren nach Anspruch 8, bei dem die vorderen Artikel (14) jeder Gruppe (12) beim Angriff der profilierten Anschlagleiste während deren Anlage entlang des sich verjüngenden Bereichs (20) der Konturierung der Anschlagleiste anpassen und in die nestartige Anordnung verschoben werden.

10. Verfahren nach Anspruch 8 oder 9, bei dem nach der Verschiebung der Artikel (14) der in Transportrichtung (F) vordere Artikel (14) einer Reihe (26) in einer Mulde (40) der profilierten Anschlagleiste und der in Transportrichtung (F) vordere Artikel (14) einer benachbarten Reihe (26) an einem Vorsprung bzw. Nocken (42) der Anschlagleiste anliegt.

11. Verfahren nach einem der vorherigen Ansprüche, bei dem während der Verschiebung der Artikel (14) eine seitliche Bewegung einzelner Artikel (14) mit einer Bewegungskomponente senkrecht zur Förderrichtung (F) erfolgt.

12. Verfahren nach einem der vorherigen Ansprüche, bei dem zumindest eine der zu verschiebenden Reihen (26) von Artikeln (14) mittels eines beweglich an der Leiste gelagerten Elements (48) eine seitliche Bewegungskomponente erfährt.

13. Vorrichtung (10) zur Durchführung des Verfahrens zur Bildung einer verdichteten oder genesteten Anordnung zu verpackender, in Gruppen (12) aufgeteilter, vorzugsweise mehrreihig hintereinander angeordneter, vorzugsweise gleichartiger Artikel (14), insbesondere zylindrischer Artikel (14) wie Getränkebehälter (16), Flaschen, Dosen oder dgl. innerhalb einer Verpackungsmaschine gemäß einem der Ansprüche 1 bis 13, mit einem Transportweg (18) für die Gruppe (12) von Artikeln (14), der sich zumindest in einem Teilabschnitt (20) in Förderrichtung (F) entlang der Längsseiten (22) verjüngt, und mit wenigstens einer profilierten Leiste, welche an einer Stirnseite der Gruppe (12) von Artikeln (14), insbesondere in Förderrichtung (F) an der Hinterseite der Gruppe (12) von Artikeln (14) zur Überführung der Artikel (14) in eine verdichtete bzw. nestartige Anordnung anlegbar ist, wobei die wenigstens eine Leiste eine zur Gruppe (12) der Artikel (14) gerichtete Strukturierung bzw. Profilierung (32) aufweist, die mit einer Außenkontur einer nestartigen oder verdichteten Anordnung der Artikel (14) korrespondiert, **dadurch gekennzeichnet, dass** die Leiste (30) ein Wellen- oder Nockenprofil mit alternierend angeordneten Mulden (40) und Nocken (42), die jeweils einen Abstand aufweisen, der geringer ist, als ein Artikeldurchmesser sowie Flanken (44) aufweist, wobei in der endgültigen Anordnung jede Mulde (40) einen Artikel (14) aufnimmt, während an der Stirnseite jeder Nocke (42) ebenfalls ein Artikel (14) anliegt, und wobei Flanken (44a, 44b, 44c, 44e, 44f, 44g, 44h) vorgesehen sind, entlang denen während der Bildung der verdichteten Anordnung Artikel (14) gleiten.

14. Vorrichtung nach Anspruch 13, wobei die Flanken (44) unsymmetrisch und nicht gleich ausgebildet sind.

15. Vorrichtung nach Anspruch 13 oder 14, wobei Flanken (44d) vorgesehen sind, die während der Bildung der genesteten Anordnung entlang der Profilierung (32) gleitende Artikel 14 auffangen.

16. Vorrichtung nach einem der Ansprüche 13 bis 15, bei der mehrere profilierte Leisten an seitlich entlang des Transportwegs (18) der Artikel (14) endlos umlaufenden Zugmitteln (34) angeordnet sind.

17. Vorrichtung nach einem der Ansprüche 13 bis 16, bei der an einer Vorderseite jeder Gruppe (12) von Artikeln (14) eine mit der Gruppe (12) entlang der Förderrichtung (F) mitbewegte, profilierte Anschlag- oder nicht profilierte Halteleiste (38) zur Anlage an die vorderen Artikel (14) angeordnet ist.

## Claims

1. A method for forming a compacted arrangement of articles (14) to be packaged, which articles (14) are preferably of the same type, sub-divided into groups (12), preferably in a plurality of rows arranged one after the other, in particular cylindrical articles (14), such as beverage containers (16), bottles, cans, or the like, within a packaging machine, wherein the group (12) of articles (14) are guided through the packaging machine, at least in a partial section (20) of their transport route (18), in particular in a section tapering in conveying direction (F) along the longitudinal sides (22), by means of at least one regularly or irregularly profiled or asymmetrically formed bar (30), which abuts on a narrow side of the group (12) of articles (14), in particular on the rear side in conveying direction (F) of the group (12) of articles (14), and in the process at least individual articles (14) of the group (12) are shifted toward each other into the compacted arrangement, wherein the bar (30) has a profiling (32) on its side facing toward the group (12) of articles (14), which profiling (32) corresponds with an outer contour of a group (12) of articles (14) that has been shifted into a compacted arrangement, **characterised in that** the bar (30) has a wave profile or cam profile with alternatingly arranged depressions (40) and cams (42), which are each spaced apart at a distance of less than an article diameter, and also has flanks (44), wherein each depression (40) accommodates one article (14) in the final arrangement, while one article (14) also abuts on the narrow side of each cam (42), and wherein articles (14) glide along flanks (44a, 44b, 44c, 44e, 44f, 44g, 44h) while the compacted arrangement is being formed.

2. The method as recited in claim 1 wherein the flanks (44) are asymmetric and designed unequally.

3. The method as recited in claim 1 or 2 wherein articles (14) gliding along the profiling (32) are captured by flanks (44d) during the formation of the nested arrangement.

4. The method as recited in one of the previous claims, in which the partial section (20) of the transport route (18) with the tapering longitudinal sides (22) has a support surface for the gliding thrust movement of the articles (14), which are shifted in the direction of transport (F) by means of the profiled bar engaging at the rear side of the group (12) and acting as thrust bar (30).

5. The method as recited in one of the previous claims, in which the articles (14) are conveyed in a horizontal direction in a plurality of individual rows (26) travelling in parallel to each other and separated from each other and are transferred onto a section without lane separators, which section tapers in conveying direction (F) along the longitudinal sides (22) and within which section each group (12) of a plurality of articles (14) is brought into the compacted or nest-like arrangement by means of the profiled thrust bar (30) being moved in conveying direction (F) toward the group (12) from the rear in a movement acting in a plurality of directions and relocating and/or shifting the articles (14) relative to each other.

6. The method as recited in one of the previous claims, in which the rearmost articles (14) of each group (12) adjust to the contour (32) of the thrust bar (30) during their movement along the tapering section (20) and are shifted into the nest-like arrangement on engagement by the profiled thrust bar (30).

7. The method as recited in one of the previous claims, in which, after shifting the articles (14), the article (14) that is in the back of a row (26) as viewed in transport direction (F) rests in a depression (40) in the profiled thrust bar (30) and the article (14) that is in the back of an adjacent row (26) as viewed in transport direction (F) abuts on a projection or cam (42) on the thrust bar (30).

8. The method as recited in one of the claims 1 to 3, in which the partial section (20) of the transport route (18) with the tapering longitudinal sides (22) has a transport plane with a moving support surface for the upright transport of the articles (14), which are slowed against the direction of transport (F) by means of the profiled bar engaging at the front side of the group (12) and acting as a profiled stop bar for slowing the group (12).

9. The method as recited in claim 8, in which the front articles (14) of each group (12) adjust to the contour of the stop bar while abutting along the tapering section (20) and are shifted into the nest-like arrangement on engagement by the profiled stop bar.

10. The method as recited in claim 8 or 9, in which, after shifting the articles (14), the article (14) that is in the front of a row (26) as viewed in transport direction (F) rests in a depression (40) in the profiled stop bar and the article (14) that is in the front of an adjacent row (26) as viewed in transport direction (F) abuts on a projection or cam (42) on the stop bar.

11. The method as recited in one of the previous claims, in which a lateral movement of individual articles (14) with a movement component in perpendicular to the direction of transport (F) occurs while shifting the articles (14).

12. The method as recited in one of the previous claims, in which at least one of the rows (26) of articles (14) to be shifted is subjected to a lateral movement component by means of an element mounted movably on the bar.

13. A device (10) for carrying out the method for forming a compacted or nested arrangement of articles (14) to be packaged, which articles (14) are preferably of the same type, sub-divided into groups (12), preferably in a plurality of rows arranged one after the other, in particular cylindrical articles (14), such as beverage containers (16), bottles, cans, or the like, within a packaging machine according to one of the claims 1 to 13, with a transport route (18) for the group (12) of articles (14), which transport route (18) tapers, at least in a partial section (20) in conveying direction (F) along the longitudinal sides (22), and with at least one profiled bar, which is abuttable on a narrow side of the group (12) of articles (14), in particular on the rear side in conveying direction (F) of the group (12) of articles (14), for the transfer of the articles (14) into a compacted or nest-like arrangement, wherein the at least one bar has a structuring or profiling (32) facing toward the group (12) of articles (14), which structuring or profiling (32) corresponds with an outer contour of a nest-like or compacted arrangement of articles (14), **characterised in that** the bar (30) has a wave profile or cam profile with alternatingly arranged depressions (40) and cams (42), which are each spaced apart at a distance of less than an article diameter, and also has flanks (44), wherein each depression (40) accommodates one article (14) in the final arrangement, while one article (14) also abuts on the narrow side of each cam (42), and wherein flanks (44a, 44b, 44c, 44e, 44f, 44g, 44h) are provided, along which articles (14) glide while the compacted arrangement is being formed.

14. The device as recited in claim 13 wherein the flanks (44) are asymmetric and designed unequally.

15. The device as recited in claim 13 or 14 wherein flanks (44d) are provided, which capture articles (14) gliding along the profiling (32) during the formation of the nested arrangement.

16. The device as recited in one of the claims 13 to 15, in which a plurality of profiled bars is arranged at traction means (34) endlessly circulating laterally along the transport route (18) of the articles (14).

17. The device as recited in one of the claims 13 to 16, in which a profiled stop bar or a non-profiled holding bar (38) for abutting on the front articles (14) is arranged at a front side of each group (12) of articles (14) to move along with the group (12) in conveying direction (F).

## Revendications

1. Procédé pour former un agencement densifié d'articles (14) de préférence similaires, à emballer, répartis en groupes (12) et agencés de préférence les uns derrière les autres sur plusieurs rangées, notamment d'articles (14) cylindriques tels que récipients de boissons (16), bouteilles, canettes ou équivalent, à l'intérieur d'une machine d'emballage, le groupe (12) d'articles (14) étant dirigé au moins sur une section (20) de sa voie d'acheminement (18), notamment dans une zone se rétrécissant dans le sens de convoyage (F) le long des côtés longitudinaux (22), à travers la machine d'emballage par au moins une baguette (30) à nervurage régulier ou irrégulier ou de forme asymétrique, ladite baguette étant en contact avec une face avant du groupe (12) d'articles (14), notamment avec l'arrière du groupe (12) d'articles (14) dans le sens de convoyage (F), et au moins certains des articles (14) du groupe (12) étant poussés les uns contre les autres pour former l'agencement densifié, la baguette (30) présentant, sur sa face tournée vers le groupe (12) d'articles (14), un nervurage (32) correspondant à un contour extérieur d'un groupe (12) d'articles (14) déplacés pour obtenir un agencement densifié, **caractérisé en ce que** la baguette (30) présente un profil à cannelures ou embossé avec des creux (40) et bossages (42) agencés en alternance, espacés respectivement d'une distance inférieure à un diamètre d'articles, ainsi que des flancs (44), chaque creux (40) accueillant dans l'agencement définitif un article (14), alors qu'un article (14) aussi est en contact avec l'avant de chaque bossage (42), et des articles (14) glissant le long des flancs (44a, 44b, 44c, 44e, 44f, 44g, 44h) pendant la formation de l'agencement densifié.

2. Procédé selon la revendication 1, les flancs (44) n'étant ni symétriques, ni de la même forme.

3. Procédé selon la revendication 1 ou 2, des articles (14) glissant le long du nervurage (32) étant captés par des flancs (44d) pendant la formation de l'agencement imbriqué.

4. Procédé selon l'une des revendications précédentes, dans laquelle la section (20) de la voie d'acheminement (18) comprenant le rétrécissement des côtés longitudinaux (22) présente une aire de support pour le mouvement de poussée par glissement des articles (14), lesquels sont poussés dans le sens de convoyage (F) par la baguette nervurée intervenant en tant que raclette (30) au niveau de l'arrière du groupe (12).

5. Procédé selon l'une des revendications précédentes, dans laquelle les articles (14) sont convoyés dans le sens horizontal en plusieurs rangées individuelles (26) parallèles séparées les unes des autres, pour être transférés, sans cloison de séparation entre les rangées, sur une zone se rétrécissant dans le sens de convoyage (F) le long des côtés longitudinaux (22), au sein de laquelle zone chaque groupe (12) de plusieurs articles (14) est mis, à l'aide de la raclette (30) nervurée déplacée dans le sens de convoyage (F) pour entrer en contact avec le groupe (12) par l'arrière, en mouvement de déplacement et/ou de translation des articles (14) dans plusieurs directions, les uns contre les autres, pour obtenir l'agencement densifié ou imbriqué.

6. Procédé selon l'une des revendications précédentes, dans laquelle les derniers articles (14) de chaque groupe (12) s'adaptent, au moment où la raclette (30) nervurée intervient pendant son déplacement le long de la zone de rétrécissement (20), à la délimitation (32) de la raclette (30) et sont déplacés pour former l'agencement imbriqué.

7. Procédé selon l'une des revendications précédentes, dans laquelle après que les articles (14) ont été déplacés, le dernier article (14), dans le sens de convoyage (F), d'une rangée (26) repose dans un creux (40) de la raclette (30) nervurée et le dernier article (14), dans le sens de convoyage (F), d'une rangée voisine (26), lui, sur une proéminence ou un bossage (42) de ladite raclette (30).

8. Procédé selon l'une des revendications 1 à 3, dans laquelle la section (20) de la voie d'acheminement (18) comprenant le rétrécissement des côtés longitudinaux (22) présente un niveau d'acheminement avec une aire de support mobile pour le transport debout des articles (14), lesquels sont retardés dans le sens inverse du sens de convoyage (F) au moyen de la baguette nervurée intervenant à l'avant du groupe (12) en tant que butée nervurée servant à la décélération du groupe (12).

9. Procédé selon la revendication 8, dans laquelle les articles (14) à l'avant de chaque groupe (12) s'adaptent, au moment où la butée (30) nervurée intervient pendant sa mise en contact le long de la zone de rétrécissement (20), à la délimitation (32) de la butée et sont déplacés pour former l'agencement imbriqué.

10. Procédé selon la revendication 8 ou 9, dans laquelle après que les articles (14) ont été déplacés, le premier article (14), dans le sens de convoyage (F), d'une rangée (26) repose dans un creux (40) de la butée nervurée et le premier article (14), dans le sens de convoyage (F), d'une rangée voisine (26), lui, sur une proéminence ou un bossage (42) de ladite butée.

11. Procédé selon l'une des revendications précédentes, dans laquelle s'effectue, pendant que les articles (14) sont déplacés, un mouvement latéral des différents articles (14) comprenant une composante de mouvement perpendiculaire au sens de convoyage (F).

12. Procédé selon l'une des revendications précédentes, dans laquelle au moins une des rangées (26) d'articles (14) à déplacer est soumise à une composante de mouvement latérale à l'aide d'un élément (48) agencé mobile sur la baguette.

13. Dispositif (10) pour la réalisation du procédé de formation d'un agencement densifié ou imbriqué d'articles (14) à emballer, répartis en groupes (12), de préférence disposés les uns derrière les autres sur plusieurs rangées, de préférence de nature similaire, notamment des articles (14) cylindriques tels que des récipients de boissons (16), des bouteilles, des canettes ou équivalents à l'intérieur d'une machine d'emballage selon l'une des revendications 1 à 13, comprenant une voie d'acheminement (18) pour le groupe (12) d'articles (14), laquelle se rétrécit au moins sur une section (20) dans le sens de convoyage (F) le long des côtés longitudinaux (22), et comprenant au moins une baguette nervurée qui peut être mise en contact avec une face avant du groupe (12) d'articles (14), notamment dans le sens de convoyage (F) avec l'arrière du groupe (12) d'articles (14) pour transférer lesdits articles (14) dans un agencement densifié ou imbriqué, l'au moins une baguette présentant une structure ou un nervurage (32) dirigé vers le groupe (12) d'articles (14), ce nervurage correspondant à un contour extérieur d'un agencement imbriqué ou densifié des articles (14), **caractérisé en ce que** la baguette (30) présente un profil à cannelures ou embossé avec des creux (40) et bossages (42) agencés en alternance et espacés respectivement d'une distance inférieure à un diamètre d'article, ainsi que des flancs (44), chaque creux (40) accueillant dans l'agencement définitif un article (14), alors qu'un article s'appuie aussi sur l'avant de chaque bossage (42), et des flancs (44a, 44b, 44c, 44e, 44f, 44g, 44h) étant prévus, le long desquels glissent des articles (14) pendant la formation de l'agencement densifié.

14. Dispositif selon la revendication 13, les flancs (44) n'étant ni symétriques, ni de la même forme.

15. Dispositif selon la revendication 13 ou 14, des flancs (44d) étant prévus, lesquels captent des articles (14) glissant le long du nervurage (32) lors de la formation de l'agencement imbriqué.

16. Dispositif selon l'une des revendications 13 à 15, dans laquelle plusieurs baguettes nervurées sont agencées sur des moyens de traction (34) répartis sans fin latéralement le long de la voie de convoyage (18) des articles (14).

17. Dispositif selon l'une des revendications 13 à 16, dans laquelle est agencée, sur une face avant de chaque groupe (12) d'articles (14), une butée nervurée ou une baguette de retenue non nervurée (38) déplacée dans le sens de convoyage (F) conjointement au groupe (12) et destinée à être appliquée aux articles (14) de devant.
